# EUROPEAN PATENT APPLICATION

(11) **EP 4 654 539 A1**
(43) Date of publication of application: **26.11.2025**
(21) Application number: 24755843.0
(22) Date of filing: 08.01.2024
(51) Int. Cl.: H04L 41/0273

(54) **COMMUNICATION METHOD AND COMMUNICATION APPARATUS**

(30) Priority: 14.02.2023 CN 202310149850
(71) Applicant: Huawei Technologies Co., Ltd., Shenzhen, Guangdong 518129 (CN)
(72) Inventor: YANG, Yanmei, Shenzhen, Guangdong 518129 (CN)
(74) Representative: Epping - Hermann - Fischer
(86) International application number: PCT/CN2024/071160
(87) International publication number: WO 2024/169468

(57) **Abstract**

Embodiments of this application provide a communication method and a communication apparatus. The method includes: A converged management function network element receives a first computing power request from a terminal device, to request the converged management function network element to allocate a computing network converged function network element that can support one or more computing power services invoked by the terminal device; and sends information about the computing network converged function network element to the terminal device, so that the terminal device sends a computing power request to the computing network converged function network element when the terminal device subsequently needs to invoke the computing power service. The computing network converged function network element provided in this solution can support a computing power service required by the terminal device, improving computing power service availability, and reducing a processing delay.

## Description

This application claims priority to Chinese Patent Application No. 202310149850.7, filed with the China National Intellectual Property Administration on February 14, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, a core idea of a computing network is to use an enhanced network technology to connect different computing nodes, and dynamically sense a computing power resource status in real time, to dynamically select a node responsible for a computing task to transmit data, thereby forming a network that senses, allocates, and schedules computing power in a global range.

Due to service development requirements of mobile operators, more operators propose to use computing resources of network nodes as computing nodes to provide computing services. However, when computing power information is used to provide a service for a terminal device, a selected computing node may not support a computing power service required by the terminal device, and therefore cannot provide a good service resource for the terminal device based on a request of the terminal device, reducing service availability and introducing an unnecessary processing delay.

### SUMMARY

This application provides a communication method and a communication apparatus, to support a computing power service required by a terminal device, thereby improving service availability, and reducing a processing delay.

According to a first aspect, a communication method is provided. The method may be performed by a converged management function network element, or may be performed by a chip or a circuit used in converged management function network element. This is not limited in this application. For ease of description, the following uses an example in which the method is performed by the converged management function network element for description.

The method includes: The converged management function network element receives a first computing power request from a terminal device, where the first computing power request is used to request the converged management function network element to allocate a computing network converged function network element, and the computing network converged function network element can provide a computing power service for the terminal device; the converged management function network element obtains information about the computing network converged function network element; and the converged management function network element sends the information about the computing network converged function network element to the terminal device in response to the first computing power request.

According to the solution provided in this application, the converged management function network element receives the first computing power request, selects, based on the first computing power request, the computing network converged function network element for the computing power service invoked by the terminal device, and sends the information about the selected computing network converged function network element to the terminal device, so that the terminal device can subsequently request the computing power service from the computing network converged function network element, thereby improving computing power service availability, and reducing a processing delay.

With reference to the first aspect, in some implementations of the first aspect, the first computing power request is further used to request to create or modify a protocol data unit PDU session required for a communication connection between the terminal device and the computing network converged function network element, and the PDU session is associated with the computing power service.

Based on this implementation, the first computing power request is sent, so that a process of selecting a computing network converged function network element is integrated with a process of selecting a communications node, and in an existing process of creating a wireless network bearer, both a computing power node and a route can be selected, thereby simplifying a process, and shortening a delay.

With reference to the first aspect, in some implementations of the first aspect, before the converged management function network element obtains the information about the computing network converged function network element, the method further includes: The converged management function network element determines, based on a computing power service indication carried in the first computing power request, one or more computing power services that the terminal device needs to invoke; or the converged management function network element determines, based on a local query, one or more computing power services that the terminal device needs to invoke.

With reference to the first aspect, in some implementations of the first aspect, the converged management function network element selects one or more computing network converged function network elements from a computing power information base based on the one or more computing power services that the terminal device needs to invoke; or the converged management function network element selects one or more computing network converged function network elements from a computing power information base based on the one or more computing power services that the terminal device needs to invoke and load information of the computing network converged function network element.

Based on this implementation, the converged management function network element can determine, by using the computing power service indication or the local query, the one or more computing power services that the terminal device needs to invoke, and further select a proper computing network converged function network element from the computing power information base based on a communication route, an invoking requirement of the terminal device, the load information of the computing network converged function network element, a computing power service capability of the computing network converged function network element, and the like.

With reference to the first aspect, in some implementations of the first aspect, the converged management function network element determines that the PDU session exists between the terminal device and the computing network converged function network element.

Based on this implementation, the converged management function network element determines that the communication connection can be performed between the terminal device and the computing network converged function network element. Further, the converged management function network element associates the PDU session with a computing power service that the terminal device needs to invoke, so as to ensure that the terminal device can obtain the computing power service based on the communication route, thereby saving a signaling exchange process, reducing overheads and a processing delay, and improving service availability.

With reference to the first aspect, in some implementations of the first aspect, the converged management function network element determines, based on the first computing power request, that the PDU session for the communication connection between the terminal device and the computing network converged function network element needs to be created or modified.

With reference to the first aspect, in some implementations of the first aspect, the converged management function network element sends an N2 request to an access network device, where the N2 request includes information used to create or modify a PDU required for a communication connection between the terminal device and the computing network converged function network element.

With reference to the first aspect, in some implementations of the first aspect, the converged management function network element sends information about an N3 connection to the computing network converged function network element.

With reference to the first aspect, in some implementations of the first aspect, the converged management function network element sends an N4 request to the computing network converged function network element, where the N4 request includes information used to create or modify a PDU session required for a communication connection between the terminal device and the computing network converged function network element.

Based on this implementation, that the converged management function network element determines that the communication connection between the terminal device and the computing network converged function network element needs to be created includes: separately sending the N4 request to the computing network converged function network element, and sending the N2 request to the access network device, so that the terminal device can finally perform the communication connection to the computing network converged function network element through the access network device, to obtain the computing power service.

With reference to the first aspect, in some implementations of the first aspect, the information about the computing network converged function network element includes connection information of the computing network converged function network element.

With reference to the first aspect, in some implementations of the first aspect, the connection information of the computing network converged function network element includes one or more of the following: address information of the computing network converged function network element; or a port number used for creating or modifying a connection between the terminal device and the computing network converged function network element.

Based on this implementation, based on the received connection information of the computing network converged function network element, when subsequently determining that a computing power service needs to be invoked, the terminal device may send a computing power request to the computing network converged function network element in a targeted manner, thereby improving network efficiency and service availability.

With reference to the first aspect, in some implementations of the first aspect, the converged management function network element generates, based on the connection information of the computing network converged function network element, a packet filtering rule corresponding to a first data flow of the PDU session; and the converged management function network element sends the packet filtering rule to the terminal device.

Based on this implementation, the terminal device may determine a corresponding data flow based on the packet filtering rule, so that when subsequently determining that a computing power service needs to be invoked, the terminal device may select a corresponding data flow to send a computing power request to the computing network converged function network element, thereby improving network efficiency and service availability.

With reference to the first aspect, in some implementations of the first aspect, the computing network converged function network element includes a first computing network converged function network element and a second computing network converged function network element, and the method further includes: The converged management function network element generates a first service identity, where the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point; and the converged management function network element sends the first service identity to the access network device, the uplink classifier, the branching point, or the terminal device.

Based on this implementation, for a scenario in which the converged management function network element provides different computing network converged function network elements for a computing power service requested by the terminal device, N3 connections between different computing network converged function network elements and the access network device are associated with a same service identity, so that when subsequently receiving a computing power request sent by the terminal device, the access network device can dynamically select a proper computing network converged function network element for the terminal device based on real-time statuses such as a current communication route, and computing power service capabilities or load information of different computing network converged function network elements, thereby improving computing power service availability and network efficiency.

With reference to the first aspect, in some implementations of the first aspect, the computing power service includes a first computing power service and a second computing power service, the computing network converged function network element includes a first computing network converged function network element and a second computing network converged function network element, the first computing network converged function network element can provide the first computing power service for the terminal device, and the second computing network converged function network element can provide the second computing power service for the terminal device; and the method further includes: The converged management function network element maps a communication connection between the terminal device and the first computing network converged function network element to a first data flow of the PDU session, where the first data flow corresponds to a first N3 connection, and the first N3 connection is a communication connection between the access network device and the first computing network converged function network element; the converged management function network element maps a communication connection between the terminal device and the second computing network converged function network element to a second data flow of the PDU session, where the second data flow corresponds to a second N3 connection, and the second N3 connection is a communication connection between the access network device and the second computing network converged function network element; and the converged management function network element sends a mapping relationship between the first data flow and the first N3 connection and a mapping relationship between the second data flow and the second N3 connection to the access network device.

Based on this implementation, for a scenario in which the converged management function network element separately provides different computing network converged function network elements for different computing power services requested by the terminal device, communication connections between different computing network converged function network elements and the terminal device are associated with different data flows of the PDU session and different N3 connections, so that when subsequently receiving a computing power request sent by the terminal device, the access network device can select a corresponding computing network converged function network element in a targeted manner, thereby improving computing power service availability and network efficiency.

With reference to the first aspect, in some implementations of the first aspect, the computing power service includes a first computing power service and a second computing power service, and the computing network converged function network element can provide the first computing power service and the second computing power service for the terminal device; and the method further includes: The converged management function network element maps the first computing power service to a first data flow of the PDU session, and maps the second computing power service to a second data flow of the PDU session, where the first data flow and the second data flow are associated with a same N3 connection, and the N3 connection is a communication connection between the access network device and the computing network converged function network element; and the converged management function network element sends a mapping relationship between the first data flow and the N3 connection and a mapping relationship between the second data flow and the N3 connection to the access network device.

Based on this implementation, for a scenario in which the converged management function network element provides a same computing network converged function network element for different computing power services requested by the terminal device, different computing power services are associated with a same data flow or different data flows of the PDU session and a same N3 connection, so that when subsequently receiving a computing power request sent by the terminal device, the access network device can forward the computing power request to a corresponding computing network converged function network element, thereby saving signaling overheads, and reducing a processing delay.

According to a second aspect, a communication method is provided. The method may be performed by a terminal device, or may be performed by a chip or a circuit used in the terminal device. This is not limited in this application. For ease of description, the following uses an example in which the method is performed by the terminal device for description.

The method includes: The terminal device sends a first computing power request to a converged management function network element, where the first computing power request is used to request the converged management function network element to allocate a computing network converged function network element, and the computing network converged function network element can provide a computing power service for the terminal device; the terminal device receives information about the computing network converged function network element from the converged management function network element; and the terminal device sends a second computing power request through an air interface bearer, where the second computing power request includes the information about the computing network converged function network element, and the second computing power request is used to request the computing network converged function network element to provide the computing power service for the terminal device.

According to the solution provided in this application, the terminal device sends the first computing power request, and receives the information about the computing network converged function network element, so that the terminal device can subsequently request the computing power service from the computing network converged function network element, thereby improving computing power service availability, and reducing a processing delay.

With reference to the second aspect, in some implementations of the second aspect, the first computing power request is further used to request to create or modify a protocol data unit PDU session required for a communication connection between the terminal device and the computing network converged function network element, and the PDU session is associated with the computing power service.

Based on this implementation, the first computing power request is sent, so that a process of selecting a computing network converged function network element is integrated with a process of selecting a communications node, and in an existing process of creating a wireless network bearer, both a computing power node and a route can be selected, thereby simplifying a process, and shortening a delay.

With reference to the second aspect, in some implementations of the second aspect, before the terminal device sends the first computing power request to the converged management function network element, the method further includes: The terminal device obtains one or more computing power services that application software of the terminal device needs to invoke.

With reference to the second aspect, in some implementations of the second aspect, that the terminal device obtains the one or more computing power services that the application software of the terminal device needs to invoke includes: The terminal device receives a registration request message or a protocol data unit PDU session request message from the application software, where the registration request message or the PDU session request message includes information about the computing power service.

Based on this implementation, the terminal device may determine, by receiving the registration request message or the protocol data unit PDU session request message, the one or more computing power services that the application software of the terminal device needs to invoke.

With reference to the second aspect, in some implementations of the second aspect, before the terminal device sends the second computing power request through the air interface bearer, the method further includes: The terminal device sends the information about the computing network converged function network element to the application software; and the terminal device receives the second computing power request from the application software.

With reference to the second aspect, in some implementations of the second aspect, before the terminal device sends the second computing power request through the air interface bearer, the method further includes: The terminal device receives a mapping relationship between the air interface bearer and the computing power service from an access network device.

With reference to the second aspect, in some implementations of the second aspect, the information about the computing network converged function network element includes connection information of the computing network converged function network element.

With reference to the second aspect, in some implementations of the second aspect, the connection information of the computing network converged function network element includes one or more of the following: address information of the computing network converged function network element; or a port number used for creating or modifying a connection between the terminal device and the computing network converged function network element.

Based on this implementation, based on the received connection information of the computing network converged function network element, when subsequently determining that a computing power service needs to be invoked, the terminal device may send a computing power request to the computing network converged function network element in a targeted manner, thereby improving network efficiency and service availability.

With reference to the second aspect, in some implementations of the second aspect, the terminal device receives a packet filtering rule from the converged management function network element, where the packet filtering rule is determined based on the connection information of the computing network converged function network element, and the packet filtering rule corresponds to a first data flow of the PDU session.

With reference to the second aspect, in some implementations of the second aspect, before the terminal device sends the second computing power request through the air interface bearer, the method further includes: The terminal device receives a mapping relationship between the air interface bearer and the first data flow from the access network device; the terminal device determines the first data flow based on the packet filtering rule; and the terminal device determines the air interface bearer based on the mapping relationship between the air interface bearer and the first data flow.

Based on this implementation, the terminal device may determine a corresponding data flow based on the packet filtering rule, so that when subsequently determining that a computing power service needs to be invoked, the terminal device may select a corresponding data flow to send a computing power request to the computing network converged function network element, thereby improving network efficiency and service availability.

With reference to the second aspect, in some implementations of the second aspect, the computing network converged function network element includes a first computing network converged function network element and a second computing network converged function network element, and the method further includes: The terminal device receives a first service identity from the converged management function network element, where the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point.

With reference to the second aspect, in some implementations of the second aspect, before the terminal device sends the second computing power request through the air interface bearer, the method further includes: The terminal device receives a mapping relationship between the first service identity and the air interface bearer from the access network device; and the terminal device determines the air interface bearer based on the first service identity.

Based on this implementation, one computing power service that the terminal device requests to invoke corresponds to a plurality of computing network converged function network elements, and for a scenario in which the converged management function network element provides different computing network converged function network elements for a computing power service requested by the terminal device, N3 connections between different computing network converged function network elements and the access network device are associated with a same service identity, so that when subsequently receiving a computing power request sent by the terminal device, the access network device can dynamically select a proper computing network converged function network element for the terminal device based on real-time statuses such as a current communication route, and computing power service capabilities or load information of different computing network converged function network elements, thereby improving computing power service availability and network efficiency.

With reference to the second aspect, in some implementations of the second aspect, the computing power service includes a first computing power service and a second computing power service, the computing network converged function network element includes a first computing network converged function network element and a second computing network converged function network element, the first computing network converged function network element can provide the first computing power service for the terminal device, the second computing network converged function network element can provide the second computing power service for the terminal device, a communication connection between the terminal device and the first computing network converged function network element is mapped to a first data flow of the PDU session, the first data flow corresponds to a first N3 connection, the first N3 connection is a communication connection between the access network device and the first computing network converged function network element, a communication connection between the terminal device and the second computing network converged function network element is mapped to a second data flow of the PDU session, the second data flow corresponds to a second N3 connection, and the second N3 connection is a communication connection between the access network device and the second computing network converged function network element.

With reference to the second aspect, in some implementations of the second aspect, before the terminal device sends the second computing power request through the air interface bearer, the method further includes: The terminal device receives a mapping relationship between a first air interface bearer and the first data flow and a mapping relationship between a second air interface bearer and the second data flow from the access network device, where the first air interface bearer and the second air interface bearer belong to the air interface bearer; and the terminal device sends the second computing power request through the first data flow, where the second computing power request is used to request the first computing network converged function network element to provide the first computing power service; and the terminal device sends the second computing power request through the second data flow, where the second computing power request is used to request the second computing network converged function network element to provide the second computing power service.

Based on this implementation, a plurality of computing power services that the terminal device requests to invoke are in one-to-one correspondence with a plurality of computing network converged function network elements. For a scenario in which the converged management function network element separately provides different computing network converged function network elements for different computing power services requested by the terminal device, communication connections between different computing network converged function network elements and the terminal device are associated with different data flows of the PDU session and different N3 connections, so that when subsequently receiving a computing power request sent by the terminal device, the access network device can determine a corresponding air interface bearer and an associated N3 connection based on mapping relationships between different data flows and different air interface bearers, to select a corresponding computing network converged function network element in a targeted manner through the N3 connection, thereby improving computing power service availability and network efficiency.

With reference to the second aspect, in some implementations of the second aspect, the computing power service includes a first computing power service and a second computing power service, the computing network converged function network element can provide the first computing power service and the second computing power service for the terminal device, the first computing power service is mapped to a first data flow of the PDU session, the second computing power service is mapped to a second data flow of the PDU session, the first data flow and the second data flow are associated with a same N3 connection, and the N3 connection is a communication connection between the access network device and the computing network converged function network element.

With reference to the second aspect, in some implementations of the second aspect, before the terminal device sends the second computing power request through the air interface bearer, the method further includes: The terminal device receives a mapping relationship between the first data flow and the air interface bearer and a mapping relationship between the second data flow and the air interface bearer from the access network device; and the terminal device sends the second computing power request through the first data flow, where the second computing power request is used to request the computing network converged function network element to provide the first computing power service; or the terminal device sends the second computing power request through the second data flow, where the second computing power request is used to request the computing network converged function network element to provide the second computing power service.

Based on this implementation, a plurality of computing power services that the terminal device requests to invoke correspond to one computing network converged function network element. For a scenario in which the converged management function network element provides a same computing network converged function network element for different computing power services requested by the terminal device, different computing power services are associated with a same data flow or different data flows of the PDU session and a same N3 connection, so that when subsequently receiving a computing power request sent by the terminal device, the access network device can determine a corresponding air interface bearer and an associated N3 connection based on mapping relationships between different data flows and different air interface bearers, to forward the computing power request to a corresponding computing network converged function network element, thereby saving signaling overheads, and reducing a processing delay.

According to a third aspect, a communication method is provided. The method may be performed by a computing network converged function network element, or may be performed by a chip or a circuit used in computing network converged function network element. This is not limited in this application. For ease of description, the following uses an example in which the method is performed by the computing network converged function network element for description.

The method includes: The computing network converged function network element receives a second computing power request from a terminal device, where the second computing power request is used to request the computing network converged function network element to provide a computing power service for the terminal device, and the second computing power request includes information about the computing network converged function network element; and the computing network converged function network element provides the computing power service for the terminal device.

According to the solution provided in this application, the computing network converged function network element may provide the computing power service for the terminal device based on the second computing power request from the terminal device, to ensure computing power service availability.

With reference to the third aspect, in some implementations of the third aspect, before the computing network converged function network element receives the second computing power request, the method further includes: The computing network converged function network element receives an N4 request from a converged management function network element, where the N4 request includes information used to create or modify a protocol data unit PDU session required for a communication connection between the terminal device and the computing network converged function network element.

Based on this implementation, the computing network converged function network element creates or modifies, based on the received N4 request, the protocol data unit PDU session required for the communication connection between the terminal device and the computing network converged function network element, so that the terminal device can finally perform the communication connection to the computing network converged function network element through the access network device, to obtain the computing power service.

With reference to the third aspect, in some implementations of the third aspect, the computing network converged function network element receives information about an N3 connection from the converged management function network element, where the N3 connection is a communication connection between an access network device and the computing network converged function network element.

With reference to the third aspect, in some implementations of the third aspect, that the computing network converged function network element receives the second computing power request from the terminal device includes: The computing network converged function network element receives the second computing power request from an access network device through an N3 connection; or the computing network converged function network element receives the second computing power request from an uplink classifier or a branching point through an N9 connection, where the N9 connection is a communication connection between the uplink classifier or the branching point and the computing network converged function network element.

Based on this implementation, the computing network converged function network element may receive the second computing power request of the terminal device through the N3 connection or the N9 connection, and provide the computing power service for the terminal device, thereby improving computing power service availability.

With reference to the third aspect, in some implementations of the third aspect, before the computing network converged function network element provides the computing power service for the terminal device, the method further includes: The computing network converged function network element determines, based on load information of the computing network converged function network element, whether to provide the computing power service for the terminal device. Based on this implementation, whether to provide the computing power service for the terminal device is determined in consideration of the load information of the computing network converged function network element. This helps improve user experience, and effectively obtain the computing power service.

With reference to the third aspect, in some implementations of the third aspect, the information about the computing network converged function network element includes connection information of the computing network converged function network element.

With reference to the third aspect, in some implementations of the third aspect, the connection information of the computing network converged function network element includes one or more of the following: address information of the computing network converged function network element; or a port number used for creating or modifying a connection between the terminal device and the computing network converged function network element.

Based on this implementation, based on the received connection information of the computing network converged function network element, when subsequently determining that a computing power service needs to be invoked, the terminal device may send a computing power request to the computing network converged function network element in a targeted manner, thereby improving network efficiency and service availability.

According to a fourth aspect, a communication method is provided. The method may be performed by an access network device, or may be performed by a chip or a circuit used in the access network device. This is not limited in this application. For ease of description, the following uses an example in which the method is performed by the access network device for description.

The method includes: The access network device receives an N2 request from a converged management function network element, where the N2 request includes information used to create or modify a PDU session required for a communication connection between a terminal device and a computing network converged function network element, where the computing network converged function network element can provide a computing power service for the terminal device; and based on the N2 request, the access network device creates or modifies an N3 connection required for a communication connection between the terminal device and the computing network converged function network element, and creates or modifies an air interface bearer required for a communication connection between the terminal device and the computing network converged function network element.

Based on this implementation, the access network device creates or modifies the N3 connection and the air interface bearer that are required for the communication connection between the terminal device and the computing network converged function network element, so that when the terminal device subsequently needs to invoke a computing power service, the terminal device can sequentially send a service request to the computing network converged function network element through the air interface bearer and the N3 connection, thereby improving communication efficiency and computing power service availability. With reference to the fourth aspect, in some implementations of the fourth aspect, the access network device receives a second computing power request from the terminal device through the air interface bearer, where the second computing power request includes information about the computing network converged function network element, and the second computing power request is used to request the computing network converged function network element to provide the computing power service for the terminal device; and the access network device determines, based on a mapping relationship between the air interface bearer and the N3 connection, to send the second computing power request to the computing network converged function network element through the N3 connection. Based on this implementation, the access network device specifically selects, based on the mapping relationship between the air interface bearer and the N3 connection and the air interface bearer for receiving the second computing power request, the corresponding N3 connection to send the second computing power request to the computing network converged function network element in a targeted manner, so as to improve communication efficiency and computing power service availability.

With reference to the fourth aspect, in some implementations of the fourth aspect, before the access network device receives the second computing power request from the terminal device through the air interface bearer, the method further includes: The access network device sends a mapping relationship between the air interface bearer and the computing power service to the terminal device.

Based on this implementation, the mapping relationship between the air interface bearer and the computing power service is sent to the terminal device, so that when the terminal device determines that the computing power service needs to be invoked, the terminal device selects the air interface bearer to send the second computing power request in a targeted manner based on the mapping relationship between the air interface bearer and the computing power service, thereby improving communication efficiency.

With reference to the fourth aspect, in some implementations of the fourth aspect, the access network device sends a mapping relationship between the air interface bearer and a first data flow to the terminal device; and the access network device receives the second computing power request through the first data flow, determines, based on the mapping relationship between the air interface bearer and the first data flow, an N3 connection corresponding to the air interface bearer, and sends the second computing power request to the computing network converged function network element through the corresponding N3 connection.

Based on this implementation, the second computing power request can be effectively forwarded to the computing network converged function network element by using the mapping relationship between the air interface bearer and the first data flow and the mapping relationship between the air interface bearer and the N3 connection, thereby improving communication efficiency and computing power service availability.

With reference to the fourth aspect, in some implementations of the fourth aspect, the access network device receives a first service identity from the converged management function network element, where the first service identity corresponds to a computing power service that the terminal device needs to invoke, and the first service identity is associated with an N3 connection between a first computing network converged function network element and the access network device and an N3 connection between a second computing network converged function network element and the access network device; the access network device sends a mapping relationship between the first service identity and the air interface bearer to the terminal device; and the access network device determines the corresponding N3 connection based on the first service identity carried in the second computing power request or through the air interface bearer for receiving the second computing power request, and selects, based on current load information of the first computing network converged function network element and current load information of the second computing network converged function network element, a most appropriate computing network converged function network element (for example, the first computing network converged function network element) to provide a computing power service for the terminal device, to send the second computing power request to the first computing network converged function network element through the determined N3 connection, so that the first computing network converged function network element determines, based on an association relationship between the N3 connection and the computing power service, to provide the computing power service.

Based on this implementation, one computing power service that the terminal device requests to invoke corresponds to a plurality of computing network converged function network elements, and for a scenario in which the converged management function network element provides different computing network converged function network elements for a computing power service requested by the terminal device, N3 connections between different computing network converged function network elements and the access network device are associated with a same service identity, so that when subsequently receiving a computing power request sent by the terminal device, the access network device can dynamically select a proper computing network converged function network element for the terminal device based on real-time statuses such as a current communication route, and computing power service capabilities or load information of different computing network converged function network elements, thereby improving computing power service availability and network efficiency.

With reference to the fourth aspect, in some implementations of the fourth aspect, the access network device receives a mapping relationship between a first data flow and a first N3 connection and a mapping relationship between a second data flow and a second N3 connection from the converged management function network element; the access network device sends a mapping relationship between a first air interface bearer and the first data flow and a mapping relationship between a second air interface bearer and the second data flow to the terminal device, where the first air interface bearer and the second air interface bearer belong to the air interface bearer, the first data flow corresponds to the first N3 connection, the first N3 connection is a communication connection between the access network device and a first computing network converged function network element, the second data flow corresponds to the second N3 connection, and the second N3 connection is a communication connection between the access network device and a second computing network converged function network element; and the access network device receives the second computing power request through the first data flow, where the second computing power request is used to request the first computing network converged function network element to provide the first computing power service; and/or the access network device receives the second computing power request through the second data flow, where the second computing power request is used to request the second computing network converged function network element to provide the second computing power service.

Based on this implementation, a plurality of computing power services that the terminal device requests to invoke are in one-to-one correspondence with a plurality of computing network converged function network elements. For a scenario in which the converged management function network element separately provides different computing network converged function network elements for different computing power services requested by the terminal device, communication connections between different computing network converged function network elements and the terminal device are associated with different data flows of the PDU session and different N3 connections, so that when subsequently receiving a computing power request sent by the terminal device, the access network device can determine a corresponding air interface bearer and an associated N3 connection based on mapping relationships between different data flows and different air interface bearers, to select a corresponding computing network converged function network element in a targeted manner through the N3 connection, thereby improving computing power service availability and network efficiency.

With reference to the fourth aspect, in some implementations of the fourth aspect, the access network device receives a mapping relationship between a first data flow and an N3 connection and a mapping relationship between a second data flow and the N3 connection from the converged management function network element; the access network device sends a mapping relationship between the first data flow of the PDU session and the air interface bearer and a mapping relationship between the second data flow of the PDU session and the air interface bearer to the terminal device, where the first data flow and the second data flow are associated with the same N3 connection, and the N3 connection is a communication connection between the access network device and the converged management function network element; and the access network device receives the second computing power request through the first data flow, where the second computing power request is used to request the computing network converged function network element to provide a first computing power service; and/or the access network device receives the second computing power request through the second data flow, where the second computing power request is used to request the computing network converged function network element to provide a second computing power service.

Based on this implementation, a plurality of computing power services that the terminal device requests to invoke correspond to one computing network converged function network element. For a scenario in which the converged management function network element provides a same computing network converged function network element for different computing power services requested by the terminal device, different computing power services are associated with a same data flow or different data flows of the PDU session and a same N3 connection, so that when subsequently receiving a computing power request sent by the terminal device, the access network device can determine a corresponding air interface bearer and an associated N3 connection based on mapping relationships between different data flows and different air interface bearers, to forward the computing power request to a corresponding computing network converged function network element, thereby saving signaling overheads, and reducing a processing delay.

According to a fifth aspect, a communication method is provided, where the method includes: A converged management function network element obtains information about a computing network converged function network element, where the computing network converged function network element can provide a computing power service for a terminal device; the converged management function network element sends an N4 request to the computing network converged function network element, where the N4 request includes information used to create or modify a PDU session required for a communication connection between the terminal device and the computing network converged function network element; the computing network converged function network element receives the N4 request from the converged management function network element; and the computing network converged function network element creates or modifies, based on the N4 request, the PDU session required for the communication connection between the terminal device and the computing network converged function network element.

With reference to the fifth aspect, in some implementations of the fifth aspect, before the converged management function network element obtains the information about the computing network converged function network element, the method further includes: The terminal device sends a first computing power request to the converged management function network element, where the first computing power request is used to request the converged management function network element to allocate a computing network converged function network element; the converged management function network element receives the first computing power request from the terminal device; further, the converged management function network element sends information about the computing network converged function network element to the terminal device in response to the first computing power request; and the terminal device receives the information about the computing network converged function network element from the converged management function network element.

With reference to the fifth aspect, in some implementations of the fifth aspect, the first computing power request is further used to request to create or modify a protocol data unit PDU session required for a communication connection between the terminal device and the computing network converged function network element, and the PDU session is associated with the computing power service.

With reference to the fifth aspect, in some implementations of the fifth aspect, before the converged management function network element obtains the information about the computing network converged function network element, the method further includes: The converged management function network element determines, based on a computing power service indication carried in the first computing power request, one or more computing power services that the terminal device needs to invoke; or the converged management function network element determines, based on a local query, one or more computing power services that the terminal device needs to invoke.

With reference to the fifth aspect, in some implementations of the fifth aspect, the converged management function network element selects one or more computing network converged function network elements from a computing power information base based on the one or more computing power services that the terminal device needs to invoke; or the converged management function network element selects one or more computing network converged function network elements from a computing power information base based on the one or more computing power services that the terminal device needs to invoke and load information of the computing network converged function network element.

With reference to the fifth aspect, in some implementations of the fifth aspect, the converged management function network element sends an N2 request to the access network device, where the N2 request includes information used to create or modify a PDU session required for a communication connection between the terminal device and the computing network converged function network element; the access network device receives the N2 request from the converged management function network element; and based on the N2 request, the access network device creates or modifies an N3 connection required for a communication connection between the terminal device and the computing network converged function network element, and creates or modifies an air interface bearer required for a communication connection between the terminal device and the computing network converged function network element.

With reference to the fifth aspect, in some implementations of the fifth aspect, the converged management function network element sends information about an N3 connection to the computing network converged function network element; and the computing network converged function network element receives the information about the N3 connection from the converged management function network element.

With reference to the fifth aspect, in some implementations of the fifth aspect, the access network device sends a mapping relationship between the air interface bearer and the computing power service to the terminal device, and the terminal device receives the mapping relationship between the air interface bearer and the computing power service from the access network device.

With reference to the fifth aspect, in some implementations of the fifth aspect, the second computing power request includes the information about the computing network converged function network element, and the second computing power request is used to request the computing network converged function network element to provide the computing power service for the terminal device; the computing network converged function network element receives the second computing power request from the terminal device; and the computing network converged function network element provides the computing power service for the terminal device.

With reference to the fifth aspect, in some implementations of the fifth aspect, before the computing network converged function network element provides the computing power service for the terminal device, the method further includes: The computing network converged function network element determines, based on load information of the computing network converged function network element, whether to provide the computing power service for the terminal device. With reference to the fifth aspect, in some implementations of the fifth aspect, the information about the computing network converged function network element includes connection information of the computing network converged function network element.

With reference to the fifth aspect, in some implementations of the fifth aspect, the connection information of the computing network converged function network element includes one or more of the following: address information of the computing network converged function network element; or a port number used for creating or modifying a connection between the terminal device and the computing network converged function network element.

With reference to the fifth aspect, in some implementations of the fifth aspect, the converged management function network element generates, based on connection information of the computing network converged function network element, a packet filtering rule corresponding to a first data flow of the PDU session; the converged management function network element sends the packet filtering rule to the terminal device; and the terminal device receives the packet filtering rule from the converged management function network element.

With reference to the fifth aspect, in some implementations of the fifth aspect, before the terminal device sends the second computing power request through the air interface bearer, the method further includes: The access network device sends a mapping relationship between the air interface bearer and the first data flow to the terminal device; the terminal device receives the mapping relationship between the air interface bearer and the first data flow from the access network device; the terminal device determines the first data flow based on the packet filtering rule; and the terminal device determines the air interface bearer based on the mapping relationship between the air interface bearer and the first data flow.

With reference to the fifth aspect, in some implementations of the fifth aspect, the computing network converged function network element includes a first computing network converged function network element and a second computing network converged function network element, and the method further includes: The converged management function network element generates a first service identity, where the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point; the converged management function network element sends the first service identity to the access network device, the uplink classifier, the branching point, or the terminal device; and the access network device, the uplink classifier, the branching point, or the terminal device receives the first service identity from the converged management function network element.

With reference to the fifth aspect, in some implementations of the fifth aspect, before the terminal device sends the second computing power request through the air interface bearer, the method further includes: The access network device sends a mapping relationship between the first service identity and the air interface bearer to the terminal device; the terminal device receives the mapping relationship between the first service identity and the air interface bearer from the access network device; and the terminal device determines the air interface bearer based on the mapping relationship between the first service identity and the air interface bearer.

With reference to the fifth aspect, in some implementations of the fifth aspect, the terminal device sends the second computing power request to the access network device through the air interface bearer; the access network device receives the second computing power request from the terminal device through the air interface bearer; the access network device sends the second computing power request to the first computing network converged function network element or the second computing network converged function network element through the N3 connection based on the first service identity; the first computing network converged function network element or the second computing network converged function network element receives the second computing power request from the access network device through the N3 connection; and the first computing network converged function network element or the second computing network converged function network element provides the computing power service for the terminal device; or the terminal device sends the second computing power request to the uplink classifier or the branching point through the air interface bearer; the uplink classifier or the branching point receives the second computing power request from the uplink classifier or the branching point through the air interface bearer; the uplink classifier or the branching point sends the second computing power request to the first computing network converged function network element or the second computing network converged function network element through the N9 connection based on the first service identity; the first computing network converged function network element or the second computing network converged function network element receives the second computing power request from the uplink classifier or the branching point through the N9 connection; and the first computing network converged function network element or the second computing network converged function network element provides the computing power service for the terminal device. With reference to the fifth aspect, in some implementations of the fifth aspect, the computing power service includes a first computing power service and a second computing power service, the computing network converged function network element includes a first computing network converged function network element and a second computing network converged function network element, the first computing network converged function network element can provide the first computing power service for the terminal device, and the second computing network converged function network element can provide the second computing power service for the terminal device; and the method further includes: The converged management function network element maps a communication connection between the terminal device and the first computing network converged function network element to a first data flow of the PDU session, where the first data flow corresponds to a first N3 connection, and the first N3 connection is a communication connection between the access network device and the first computing network converged function network element; the converged management function network element maps a communication connection between the terminal device and the second computing network converged function network element to a second data flow of the PDU session, where the second data flow corresponds to a second N3 connection, and the second N3 connection is a communication connection between the access network device and the second computing network converged function network element; the converged management function network element sends a mapping relationship between the first data flow and the first N3 connection and a mapping relationship between the second data flow and the second N3 connection to the access network device; and the access network device receives the mapping relationship between the first data flow and the first N3 connection and the mapping relationship between the second data flow and the second N3 connection from the converged management function network element.

With reference to the fifth aspect, in some implementations of the fifth aspect, before the terminal device sends the second computing power request through the air interface bearer, the method further includes: The access network device sends a mapping relationship between a first air interface bearer and the first data flow and a mapping relationship between a second air interface bearer and the second data flow to the terminal device, where the first air interface bearer and the second air interface bearer belong to the air interface bearer; and the terminal device receives the mapping relationship between the first air interface bearer and the first data flow and the mapping relationship between the second air interface bearer and the second data flow from the access network device.

With reference to the fifth aspect, in some implementations of the fifth aspect, the terminal device sends the second computing power request to the access network device through the first data flow, where the second computing power request is used to request the first computing network converged function network element to provide the first computing power service; the access network device receives the second computing power request from the terminal device through the first data flow; the access network device determines, based on the mapping relationship between the first air interface bearer and the first data flow, to send the second computing power request to the first computing network converged function network element through the first N3 connection; the first computing network converged function network element receives the second computing power request from the access network device through the first N3 connection; and the first computing network converged function network element provides the first computing power service for the terminal device; and the terminal device sends the second computing power request to the access network device through the second data flow, where the second computing power request is used to request the second computing network converged function network element to provide the second computing power service; the access network device receives the second computing power request from the terminal device through the second data flow; the access network device determines, based on the mapping relationship between the second air interface bearer and the second data flow, to send the second computing power request to the second computing network converged function network element through the second N3 connection; the second computing network converged function network element receives the second computing power request from the access network device through the second N3 connection; and the second computing network converged function network element provides the second computing power service for the terminal device.

With reference to the fifth aspect, in some implementations of the fifth aspect, the computing power service includes a first computing power service and a second computing power service, and the computing network converged function network element can provide the first computing power service and the second computing power service for the terminal device; and the method further includes: The converged management function network element maps the first computing power service to a first data flow of the PDU session, and maps the second computing power service to a second data flow of the PDU session, where the first data flow and the second data flow are associated with a same N3 connection, and the N3 connection is a communication connection between the access network device and the computing network converged function network element; the converged management function network element sends a mapping relationship between the first data flow and the N3 connection and a mapping relationship between the second data flow and the N3 connection; and the access network device receives the mapping relationship between the first data flow and the N3 connection and the mapping relationship between the second data flow and the N3 connection from the converged management function network element.

With reference to the fifth aspect, in some implementations of the fifth aspect, before the terminal device sends the second computing power request through the air interface bearer, the method further includes: The access network device sends a mapping relationship between the first data flow and the air interface bearer and a mapping relationship between the second data flow and the air interface bearer to the terminal device; and the terminal device receives the mapping relationship between the first data flow and the air interface bearer and the mapping relationship between the second data flow and the air interface bearer from the access network device.

With reference to the fifth aspect, in some implementations of the fifth aspect, the terminal device sends the second computing power request to the access network device through the first data flow, where the second computing power request is used to request the computing network converged function network element to provide the first computing power service; the access network device receives the second computing power request from the terminal device through the first data flow; the access network device determines, based on the mapping relationship between the first data flow and the air interface bearer, to send the second computing power request to the computing network converged function network element through the N3 connection; the computing network converged function network element receives the second computing power request from the access network device through the N3 connection; and the computing network converged function network element provides the first computing power service for the terminal device; or the terminal device sends the second computing power request to the access network device through the second data flow, where the second computing power request is used to request the computing network converged function network element to provide the second computing power service; the access network device receives the second computing power request from the terminal device through the second data flow; the access network device determines, based on the mapping relationship between the second data flow and the air interface bearer, to send the second computing power request to the computing network converged function network element through the N3 connection; the computing network converged function network element receives the second computing power request from the access network device through the N3 connection; and the computing network converged function network element provides the second computing power service for the terminal device.

According to a sixth aspect, a converged management function network element is provided, including: a transceiver unit, configured to receive a first computing power request from a terminal device, where the first computing power request is used to request the converged management function network element to allocate a computing network converged function network element, and the computing network converged function network element can provide a computing power service for the terminal device; and a processing unit, configured to obtain information about the computing network converged function network element, where the transceiver unit is further configured to send the information about the computing network converged function network element to the terminal device in response to the first computing power request.

The transceiver unit may perform receiving and sending in the first aspect, and the processing unit may perform processing other than receiving and sending in the first aspect.

According to a seventh aspect, a terminal device is provided, including: a transceiver unit, configured to send a first computing power request to a converged management function network element, where the first computing power request is used to request the converged management function network element to allocate a computing network converged function network element, and the computing network converged function network element can provide a computing power service for the terminal device, where the transceiver unit is further configured to receive information about the computing network converged function network element from the converged management function network element; and the transceiver unit is further configured to send a second computing power request through an air interface bearer, where the second computing power request includes the information about the computing network converged function network element, and the second computing power request is used to request the computing network converged function network element to provide the computing power service for the terminal device.

The transceiver unit may perform receiving and sending in the second aspect, and the processing unit may perform processing other than receiving and sending in the second aspect.

According to an eighth aspect, a computing network converged function network element is provided, including: a transceiver unit, configured to receive a second computing power request from a terminal device, where the second computing power request is used to request the computing network converged function network element to provide a computing power service for the terminal device, and the second computing power request includes information about the computing network converged function network element; and a processing unit, configured to provide the computing power service for the terminal device.

The transceiver unit may perform receiving and sending in the third aspect, and the processing unit may perform processing other than receiving and sending in the third aspect.

According to a ninth aspect, an access network device is provided, including: a transceiver unit, configured to receive an N2 request from a converged management function network element, where the N2 request includes information used to create or modify a PDU session required for a communication connection between a terminal device and a computing network converged function network element, where the computing network converged function network element can provide a computing power service for the terminal device; and a processing unit, configured to: based on the N2 request, create or modify an N3 connection required for a communication connection between the terminal device and the computing network converged function network element, and create or modify an air interface bearer required for a communication connection between the terminal device and the computing network converged function network element.

The transceiver unit may perform receiving and sending in the fourth aspect, and the processing unit may perform processing other than receiving and sending in the fourth aspect.

According to a tenth aspect, a communication system is provided, including one or more of a terminal device, a converged management function network element, a computing network converged function network element, and an access network device.

The communication system is configured to perform the method in any possible implementation of the fifth aspect.

Specifically, the terminal device performs the method in any possible implementation of the first aspect, the converged management function network element performs the method in any possible implementation of the second aspect, the computing network converged function network element performs the method in any possible implementation of the third aspect, and the access network device performs the method in any possible implementation of the fourth aspect.

According to an eleventh aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, so that the communication apparatus performs the method according to any possible implementation of the first aspect to the fifth aspect.

Optionally, there are one or more processors, and there are one or more memories.

Optionally, the memory may be integrated with the processor, or the memory and the processor are separately disposed.

Optionally, the communication apparatus further includes a transmitter (transmitter machine) and a receiver (receiver machine).

According to a twelfth aspect, a computer-readable storage medium is provided. The computer-readable storage medium stores a computer program or code. When the computer program or code is run on a computer, the computer is enabled to perform the method according to any possible implementation of the first aspect to the fifth aspect.

According to a thirteenth aspect, a chip is provided, including at least one processor. The at least one processor is coupled to a memory. The memory is configured to store a computer program. The processor is configured to invoke the computer program from the memory and run the computer program, so that an apparatus on which the chip system is installed performs the method according to any possible implementation of the first aspect to the fifth aspect.

The chip may include an input circuit or interface for sending information or data and an output circuit or interface for receiving information or data.

According to a fourteenth aspect, a computer program product is provided. The computer program product includes computer program code. When the computer program code is run by an apparatus, the apparatus is enabled to perform the method according to any possible implementation of the first aspect to the fifth aspect.

### BRIEF DESCRIPTION OF DRAWINGS

FIG. 1 is a diagram of a structure of a network architecture applicable to this application;
FIG. 2 is a schematic flowchart of a computing node selection and routing method according to an embodiment of this application;
FIG. 3 is a schematic flowchart of another computing node selection and routing method according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a diagram of a structure of a communication apparatus 1000 according to an embodiment of this application;
FIG. 10 is a diagram of a structure of a communication apparatus 2000 according to an embodiment of this application; and
FIG. 11 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network created and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is referred to as a 3GPP network for short. The 3GPP network usually includes but is not limited to a 5th generation (5th generation, 5G) mobile communication network, a 4th generation (4th generation, 4G) mobile communication network, and other future communication systems such as a (6th generation, 6G) network.

For ease of description, the PLMN or the 5G network is used as an example for description in embodiments of this application.

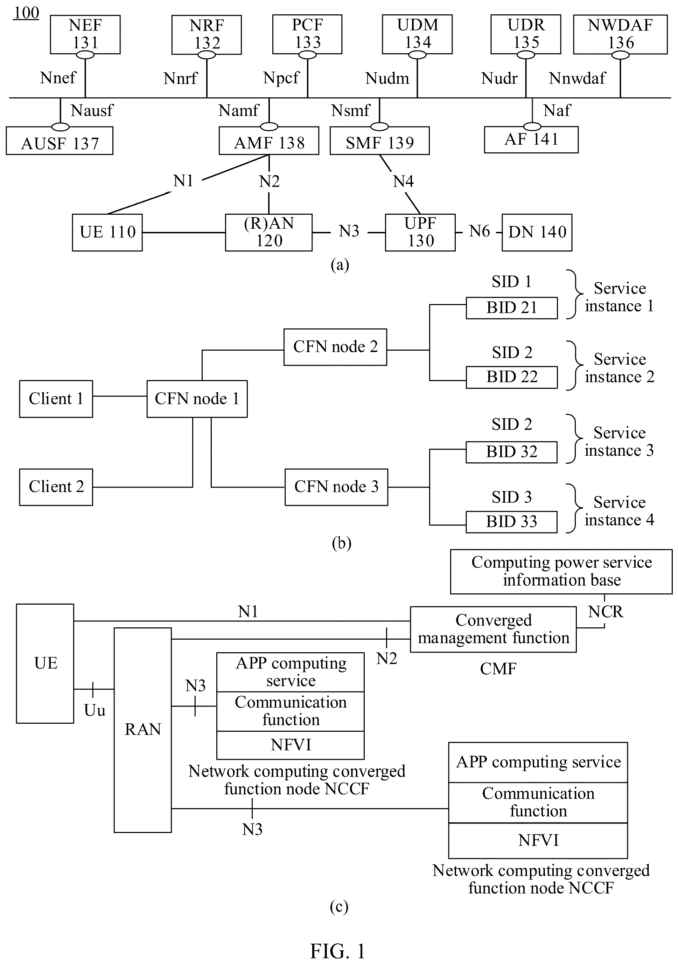

FIG. 1 is a diagram of a network architecture applicable to this application. As shown in (a) in FIG. 1, a 5G network architecture based on a service-based architecture SBA in a non-roaming scenario defined in a 3GPP standardization process is used as an example. As shown in the figure, the network architecture may include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless transceiver functions, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, or may be deployed on the water, or may be deployed in the air. The terminal device 110 may be a cellular phone, a cordless phone, a session initiation protocol phone, a smartphone, a mobile phone, a wireless local loop station, a personal digital processor, or the like. Alternatively, the terminal device 110 may be a handheld device having a wireless communication function, a computing device, another device connected to a wireless modem, a vehicle-mounted device, a wearable device, an uncrewed aerial vehicle device, a terminal in internet of things or internet of vehicles, a terminal in any form in a 5G network or a future network, relay user equipment, a terminal in a future evolved 6G network, or the like. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120.

That is, the RAN is used as a mobile access network, and is responsible for network access functions such as access control and radio bearer management for a terminal to access the network. An access network device (RAN device) in embodiments of this application is a device that provides a wireless communication function for the terminal device 110, and may also be referred to as a network device. The RAN device includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short.

The CN part may include but is not limited to the following network functions (Network Functions, NFs): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (Authentication Server Function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. The terminal device 110 may create a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by an operator, and is mainly used to enable a third party to use a service provided by a network, support the network in opening a capability, an event, and data analysis of the network, convert security configuration information from an external application to a PLMN and exchange information inside and outside the PLMN, provide an API interface opened by the operator network, and provide interaction between an external server and an internal operator network, and the like.
3. The NRF 132 is a control plane function provided by an operator, and may be configured to maintain real-time information of a network function and a service in a network.
4. The PCF 133 is a control plane function provided by an operator, and supports a unified policy framework to govern network behavior and provide subscription information related to a policy rule and policy decision for another control function.
5. The UDM 134 is a control plane function provided by the operator, and is responsible for storage of a subscription permanent identifier (subscription permanent identifier, SUPI) of a subscriber of the operator network, a generic public subscription identifier (generic public subscription identifier, GPSI) of the subscriber, a credential, and other information.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function AF, an operations, administration and maintenance (operations, administration and maintenance, OAM) system, and the like, and provide the NF and the AF with NWDAF service registration, data exposure, data analysis, and the like.
8. The AUSF 137 is a control plane function provided by an operator, and is usually used for primary authentication, namely, authentication between the terminal device 110 (the subscriber) and the operator network. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by an operator network, and is responsible for managing a protocol data unit (protocol data unit, PDU) session of the terminal device 110. The PDU session is a channel for transmitting a PDU, and the terminal device and the data network DN 140 need to transmit PDUs to each other through the PDU session. The SMF network function 139 is responsible for creation, maintenance, deletion, and the like of the PDU session. The SMF network function 139 includes session-related functions such as session management (for example, session creation, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by an operator network, and is configured to provide application layer information. The AF 141 may interact with a policy framework through a network exposure function network element, or directly interact with the policy framework to make a policy decision request.

It may be understood that the foregoing network elements or functions may be physical entities in a hardware device, software instances running on dedicated hardware, or virtualized functions instantiated on a sharing platform (for example, a cloud platform).

In (a) in FIG. 1, Nnef, Nnrf, Npcf, Nudm, Nudr, Nnwdaf, Nausf, Namf, Nsmf, N1, N2, N3, N4, and N6 are interface sequence numbers. N1 is an interface between a terminal UE and a core network control plane, and is used to transmit NAS signaling. N2 is a communication interface between an access network element AN and the core network control plane. N3 is a communication interface between the access network element AN and a core network user plane network element UPF, and is configured to transmit user data. N4 is a communication interface between a control plane session management network element SMF and the user plane network element UPF, and is configured to perform policy configuration and the like on the UPF. The network elements may communicate with each other through an interface. For example, the UE is connected to the AN device by using a radio resource control (radio resource control, RRC) protocol, and the UE communicates with the AN device through a Uu interface. N6 is a communication interface between the user plane UPF and a DN. It should be noted that interface names between the network functions in the figure are merely examples. During specific implementation, the interface names of the system architecture may alternatively be other names. This is not limited in this application. It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

(b) in FIG. 1 shows a system architecture of a computing first network (computing first network, CFN). The architecture of the CFN includes a CFN node (CFN node), a service instance (service instance), and a client (client). As a forwarding node in the network, the CFN node may implement packet forwarding based on computing power and a service on the basis of packet forwarding in a conventional network. The service instance (or a computing node) is configured to provide computing power and a service capability. The client is configured to request computing power and a service.

The following briefly describes terms related to the CFN:

### 1. Computing power

The computing power is measured in different units in different application scenarios: hash per second (H/S) used for Bitcoin and floating point operations per second (FLOP/S) used for AI and graphics processing. The intelligent society mainly requires a floating point operation capability. A Bitcoin network needs to perform intensive mathematical and encryption-related operations for a security purpose. For example, when the network reaches a hash rate of 10 Th/s, it indicates that the network can perform 10 trillion calculations per second.

### 2. Computing network (computing network, CN)

The computing network is a new information infrastructure that allocates on demand and flexibly schedules computing, storage, and network resources among a cloud, a network, and an edge based on service requirements. The network infrastructure, as a next-generation network-based technical architecture and service operating system, can sense, schedule, and orchestrate computing power resources, and provide new network-computing-storage information and communications technology (information and communications technology, ICT) integrated services at a network layer.

### 3. Computing power information release

As shown in (b) in FIG. 1, at least one service instance may exist in the CFN, service instances of a same type use a same service identity (service identity, SID) (for example, an anycast address), and each service instance has a unique binding identity (binding identity, BID) (for example, an IP address). A service SID 2 in the figure includes two service instances BID 22 and BID 32. A computing power information release process includes:
The service instance releases service information to the CFN node. The service information includes an SID, a BID, and a service state (for example, may be available resource information, a total resource quantity, an available resource proportion, and an available resource level) on the service instance.

Service information is released between CFN nodes (for example, through an extended border gateway protocol (BGP). The released service information may be SID information, a service state, and the like that are obtained by combining the service information obtained in step a by the CFN node. For example, a CFN node 2 in (b) in FIG. 1 collects SID information and service states that can be provided by all connected service instances in step a, and then the CFN node 2 sends the SID information and the service states to a CFN node 1 through the extended BGP. When the service information changes, the CFN node 2 may send updated information to the CFN node 1.

### 4. Computing power selection

After receiving a service request from the client, the CFN node, as a CFN ingress (ingress) node (other CFN nodes are CFN egress (egress) nodes), selects a CFN egress node based on the service information obtained in steps a and b, a network state between the CFN ingress node and the CFN egress node, and a SID requested by the client. Then, the CFN ingress node forwards the service request of the client to the selected CFN egress node. After receiving the request, the CNF egress node selects a service instance BID corresponding to a requested SID based on the SID, and forwards the service request.

In a process of forwarding a service between the CFN ingress node and the CFN egress node, user request information and a corresponding forwarding rule need to be recorded, so that when a user request for a same SID is subsequently received, a same service instance and a same forwarding path are used to provide a same service and same network quality.

For example, a client 1 connected to a CFN node 1 sends a service request for the SID 2, where the CFN node 1 serves as a CFN ingress node (the CFN node 2 and the CFN node 3 are CFN egress nodes), and then determines, based on service information received from the CFN node 2 and the CFN node 3, that both the CFN node 2 and the CFN node 3 can provide services for the SID 2. Then, the CFN node 1 selects the CFN node 2 as a CFN egress node of the current request with reference to network state information, service states provided by the CFN node 2 and the CFN node 3, and a local policy of the CFN node 1, to forward the request to the CFN node 2. After receiving the request, the CFN node 2 selects, based on states of locally maintained services and service instances, the BID 22 to provide a service for the current request, and then sends the request to the BID 22.

### 5. Computing power routing

In a process of sending a request between the CFN ingress node and the CFN egress node, a route may be specified, for example, a packet is sent based on a specified path in a manner such as IPv6-based segment routing (Segment Routing IPv6, SRv6).

It should be understood that the foregoing implementation of the CFN network is implemented based on a capability of a user plane forwarding node, and is referred to as a distributed architecture. In addition, a central controller-based implementation (a central architecture) is further included. For example, there is a central control plane network element. The control plane network element interacts with a user plane network element, so that the control plane network element obtains computing power/service information and a service state that are associated with the user plane network element, to select a service entity for a user, and generate a related forwarding policy for configuration on the user plane network element.

(c) in FIG. 1 shows a system structure in which a user plane node used as computing power of a computing node and a network user plane node are converged, including UE, a RAN, a converged management function network element (converged management function, CMF), and a network computing converged function network element (network computing converged function, NCCF). The NCCF may also be referred to as a computing network converged function network element (computing network converged function, CNCF). The CMF is located on a core network control plane, and is responsible for selecting an NCCF, and performing connection management and control functions of a computing service node such as creating, deleting, and modifying a communication connection between the UE and the NCCF. The NCCF is responsible for providing computing power services for computing service requests of the UE, including an APP computing service, a communication function, and network functions virtualization (network functions virtualization, NFVI).

Optionally, a message between the UE and the CMF may be forwarded by a third entity in an actual transmission process. This is not specifically limited in this application.

It should be understood that FIG. 1 is merely a simplified diagram illustrated for ease of understanding. The wireless communication system may further include another network device or another terminal device. Embodiments of this application are applicable to any communication scenario in which a transmitter device communicates with a receiver device.

It should be noted that a specific structure of an entity for performing a method provided in embodiments of this application is not particularly limited in embodiments of this application, provided that the entity can run a program that records code for the method provided in embodiments of this application to perform communication according to the method provided in embodiments of this application. For example, the method provided in embodiments of this application may be performed by a terminal device or a functional module that is in a terminal device and that can invoke the program and execute the program.

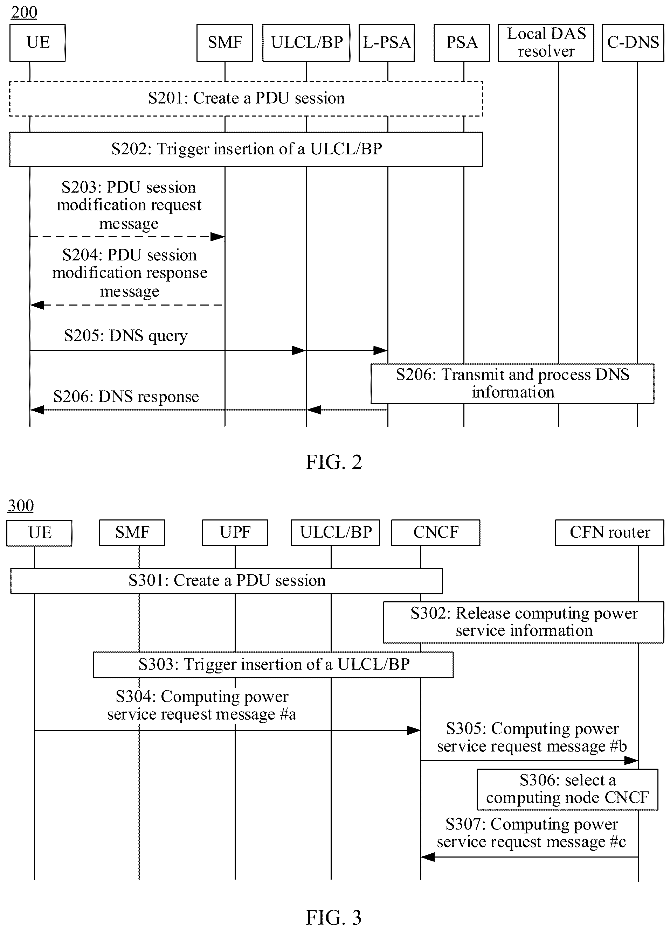

Due to service development requirements of mobile operators, more operators propose to use computing resources of network nodes as computing nodes to provide computing services. With reference to FIG. 2 and FIG. 3, in a scenario in which a user forwarding plane of a mobile network serves as a computing node to provide a computing network converged service, the following specifically describes a computing node selection, user plane node selection, and computing power routing method.

FIG. 2 is a schematic flowchart of a computing node selection and routing method 200 according to an embodiment of this application. As shown in FIG. 2, the method specifically includes the following plurality of steps. For a part that is not described in detail, refer to an existing protocol. S201: Create a PDU session (PDU session).

For example, UE interacts with a network according to a 3GPP standard procedure, to create the PDU session.

S202: An SMF selects a local DNS, triggers insertion of a ULCL/BP, and sends an address of the selected local DNS to the UE. Correspondingly, the UE receives the address of the local DNS from the SMF.

S203: The UE sends a PDU session modification request message to the SMF. Correspondingly, the SMF receives the PDU session modification request message from the UE.

S204: The SMF sends a PDU session modification response message to the UE. Correspondingly, the UE receives the PDU session modification response message from the SMF.

S205: The UE sends a domain name system (domain name system, DNS) query message to an L-SPA through a BP/ULCL UPF. Correspondingly, the L-SPA receives the DAS query message from the UE through the BP/ULCL UPF.

For example, DNS query herein may correspond to computing node selection, and is forwarded by the BP/ULCL UPF and the L-PSA to a local DNS node.

S206: Transmit and process DNS information.

An edge application server is selected by a local DNS server (resolver).

S207: The L-SPA sends a DNS response message to the UE through the BP/ULCL UPF. Correspondingly, the UE sends the DNS response message to the UE through the BP/ULCL UPF. Optionally, to resolve a problem of selecting a computing network converged function node CNCF, as execution bodies of the method 200, the PSA node may be used as a CNCF that plays a user plane forwarding role, and the edge application server may be used as a CNCF that plays a computing power service role.

According to the solution provided above, selection of a network user plane node and selection of a computing node are performed independently. In the two independent selection processes, a total delay may be large. As a result, some computing power service requests that have a high delay requirement cannot be met, and a computing service node cannot be flexibly changed in time when a network status and a computing node change. In addition, because selection of the computing node and selection of the user plane forwarding node are separately performed by the SMF and the DNS server, two selection results may be different.

FIG. 3 is a schematic flowchart of another computing node selection and routing method 300 according to an embodiment of this application. As shown in FIG. 3, the method specifically includes the following plurality of steps.

S301: Create a PDU session.

For example, UE interacts with a network according to a 3GPP standard procedure, to create the PDU session.

S302: Release computing power service information.

For example, a CNCF that plays a role of a computing node sends the computing power service information to a CFN router. Correspondingly, the CFN router receives the computing power service information from the CNCF.

S303: An SMF triggers insertion of a BP/ULCL, and selects a platform security architecture (platform security architecture, L-PSA).

The CNCF is selected by the SMF that plays a role of the L-PSA, and inserts user plane routing information.

S304: The UE sends a computing power service request message #a to the CNCF. Correspondingly, the CNCF receives the computing power service request message #a from the UE.

S305: The CNCF sends a computing power service request message #b to the CFN router. Correspondingly, the CFN router receives the computing power service request message #b from the CNCF.

S306: The CFN router selects a computing node.

For example, the CFN router uses the CNCF as a role of the computing node to select the computing node.

S307: The CFN router sends a computing power service request message #c to the CFCN. Correspondingly, the CFCN receives the computing power service request message #c from the CFN router.

According to the solution provided above, when the SMF selects the CNCF as a user plane forwarding node, factors such as a computing power service capability and a load are not considered. Because a selected CNCF node may not support a required computing power service, a CFN routing node may select different CNCF nodes when performing computing power routing selection subsequently. In addition, a transmission process of the computing power service request message may introduce an unnecessary processing delay.

In view of this, this application provides a communication method and a communication apparatus. In a new deployment scenario of a computing network converged service, an enhanced mobile network bearer control network element implements a computing node/computing routing control function, performs deep convergence on wireless network bearer creation and computing node selection, and completes computing node and routing selection while creating a wireless network bearer, thereby simplifying a procedure and shortening a delay. This avoids problems of overheads and potential inconsistent node selection caused by independent selection of a network user plane forwarding node and a computing node.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between the associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers indicate differentiation for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

It should be noted that in the following descriptions, names of the information are merely examples for description, are not limited in this application, and should not constitute any limitation on the technical solutions of this application.

Fourth, in this application, the descriptions "when...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, "service" represents a requirement of a terminal device. In a specific implementation process, "computing power" may also represent a requirement of the terminal device. The computing power may be a computing type (for example, a CPU or a GPU), a processing type (for example, computing or storage), an algorithm requirement (for example, image recognition or content parsing), a method/function invocation, a computing power service, or the like. This is not limited in this application.

Eighth, in this application, "storage" may refer to storage in one or more memories. The one or more memories may be separately disposed, or may be integrated in an encoder, a decoder, a processor, or a communication apparatus. Alternatively, a part of the one or more memories may be separately disposed, and a part of the one or more memories are integrated into the decoder, the processor, or the communication apparatus. A type of the storage may be a storage medium in any form. This is not limited in this application.

The following describes in detail the communication method provided in embodiments of this application with reference to the accompanying drawings. For example, the communication method may be applied to the communication system shown in FIG. 1.

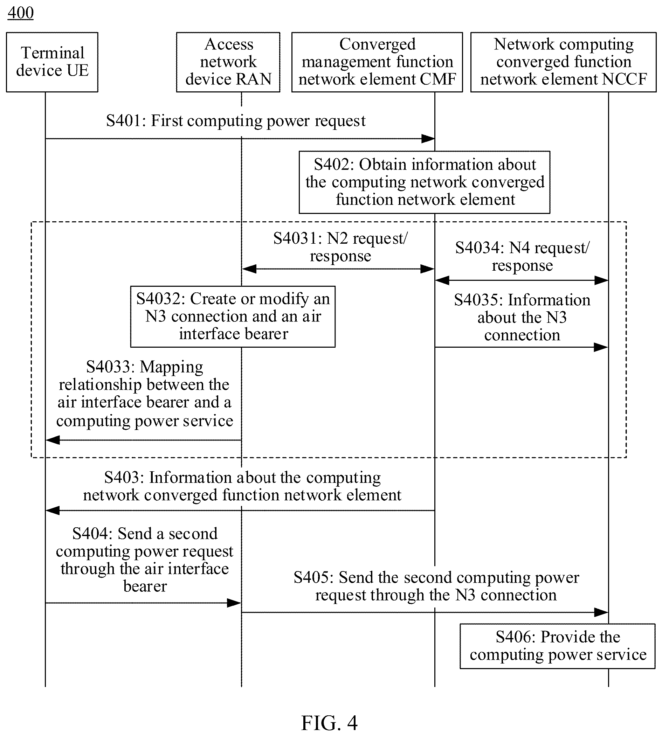

FIG. 4 is a schematic flowchart of a communication method 400 according to an embodiment of this application. As shown in FIG. 4, the method includes the following plurality of steps.

S401: A terminal device sends a first computing power request to a converged management function network element.

Correspondingly, the converged management function network element receives the first computing power request from the terminal device.

The first computing power request is used to request the converged management function network element to allocate a computing network converged function network element, and the computing network converged function network element can provide a computing power service for the terminal device.

Optionally, the first computing power request includes a computing power service indication, and the computing power service indication may be understood as indication information of one or more computing power services that the terminal device needs to invoke, for example, computing power service list information.

Further, the first computing power request is further used to request to create or modify a PDU session required for a communication connection between the terminal device and the computing network converged function network element, and the PDU session is associated with the computing power service that the terminal device needs to invoke.

Optionally, the first computing power request further includes a computing power bearer indication, used to create or modify a PDU session required for a communication connection between the terminal device and the computing network converged function network element. It should be understood that the PDU session is a process of communication between the terminal device and a data network DN. After the PDU session is created, a data transmission channel between the terminal device and the DN is created.

In actual transmission, the terminal device may send the first computing power request to the converged management function network element through forwarding by a third-party entity, and a message used to transmit the first computing power request may change. For example, the terminal device may transmit the first computing power request to the converged management function network element through a RAN and an AMF. Optionally, in a future network evolution process, this application does not exclude that the first computing power request does not pass through the AMF, but is directly sent by the terminal device to the converged management function network element through the RAN. A specific transmission path is not limited in this application. Optionally, before the terminal device sends the first computing power request to the converged management function network element, the terminal device obtains one or more computing power services that need to be invoked by application software (for example, an application client, application intermediate software, or an operating system) of the terminal device.

For example, the application software sends a registration request message or a PDU session request message to the terminal device, and correspondingly, the terminal device receives the registration request message or the PDU session request message from the application software. The registration request message or the PDU session request message includes information about a computing power service required by the application software, for example, an identifier or an indication of the computing power service. Optionally, the one or more computing power services that need to be invoked by the application software may be carried in the registration request message or the PDU session request message by using one piece of computing power service list information and sent to the terminal device.

Optionally, before the terminal device sends the first computing power request to the converged management function network element, the terminal device may obtain a mapping relationship between computing power service information and network connection information. For example, a plurality of service instances with a same computing power type are grouped into one computing power slice, or all required computing power service instances serving an application are grouped into one computing power slice. Further, the terminal device determines, based on the computing power service list information carried in the registration request message or the PDU session request message and the mapping relationship between the computing power service information and the network connection information pre-obtained from a network, information about the PDU session required for carrying the one or more computing power services.

Based on the first computing power request received in step S401, the converged management function network element determines the one or more computing power services that the terminal device needs to invoke. For example, the converged management function network element determines, based on the computing power service indication carried in the first computing power request, the one or more computing power services that the terminal device needs to invoke. For another example, the converged management function network element determines, based on a local query, the one or more computing power services that the terminal device needs to invoke.

Further, the converged management function network element needs to select an appropriate computing network converged function network element for the terminal device based on the one or more computing power services that the terminal device needs to invoke, that is, performs step S402.

S402: The converged management function network element obtains information about the computing network converged function network element.

The information about the computing network converged function network element includes connection information of the computing network converged function network element.

For example, the connection information of the computing network converged function network element includes one or more of the following: address information and/or identification information of the computing network converged function network element; or a port number used for creating or modifying a connection between the terminal device and the computing network converged function network element.

Optionally, the information about the computing network converged function network element further includes load (load) information. A granularity of the load information of the computing network converged function network element may be an overall load status of the computing network converged function network element, that is, a load status corresponding to all computing power services supported by the computing network converged function network element, or may be a load status corresponding to each computing power service supported by the computing network converged function network element. This is not limited in this application.

In a manner, the converged management function network element selects one or more computing network converged function network elements from a computing power information base based on the one or more computing power services that the terminal device needs to invoke.

In another manner, the converged management function network element selects one or more computing network converged function network elements from a computing power information base based on the one or more computing power services that the terminal device needs to invoke and load information of the computing network converged function network element.

It should be understood that, when selecting the computing network converged function network element, the converged management function network element needs to comprehensively consider a communication route and a computing power service capability of the computing network converged function network element, including a computing power service supported by the computing network converged function network element, load of the computing network converged function network element, and the like.

It should be noted that a relationship between a computing network converged function network element selected by the converged management function network element and a computing power service that the terminal device needs to invoke may meet the following condition: One computing power service corresponds to one computing network converged function network element; or one computing power service corresponds to a plurality of computing network converged function network element nodes; or a plurality of computing power services correspond to one computing network converged function network element node.

Optionally, if the converged management function network element determines that the PDU session required for the communication connection between the terminal device and the selected computing network converged function network element already exists, the converged management function network element sends a PDU session modification request, that is, associates the PDU session with the one or more computing power services that the terminal device needs to invoke. Otherwise, the converged management function network element needs to send a PDU session creation request to the converged management function network element.

Based on the computing network converged function network element selected by the converged management function network element in step S402, with reference to steps S4031 to S4035, the following describes that the converged management function network element requests, by using an N2 request and an N4 request, an access network device and the computing network converged function network element to create or modify the PDU session required for the communication connection between the terminal device and the computing network converged function network element.

S4031: The converged management function network element sends the N2 request to the access network device.

Correspondingly, the access network device receives the N2 request from the converged management function network element.

Optionally, the N2 request includes information used to create or modify a PDU session required for a communication connection between the terminal device and the computing network converged function network element.

S4032: Based on the N2 request, the access network device creates or modifies an N3 connection required for a communication connection between the terminal device and the computing network converged function network element, and creates or modifies an air interface bearer required for a communication connection between the terminal device and the computing network converged function network element.

It should be understood that information about the N3 connection may be information about a communication connection between the access network device and the computing network converged function network element, for example, a port number or an IP address. The air interface bearer may be used by the terminal device and the access network device to transmit data or signaling.

Specifically, for a specific implementation in which the access network device creates or modifies the N3 connection and the air interface bearer, refer to existing related descriptions, for example, a PDU session implementation in a 5G system. For brevity, details are not described herein.

S4033: The access network device sends a mapping relationship between the air interface bearer and the computing power service to the terminal device.

Correspondingly, the terminal device receives the mapping relationship between the air interface bearer and the computing power service from the access network device.

S4034: The converged management function network element sends an N4 request to the computing network converged function network element.

Correspondingly, the computing network converged function network element receives the N4 request from the converged management function network element.

Optionally, the N4 request includes information used to create or modify a PDU session required for a communication connection between the terminal device and the computing network converged function network element.

Optionally, the N4 request carries a computing power service indication and/or computing power service list information that the terminal device needs to invoke.

Correspondingly, the computing network converged function network element sends an N4 response to the converged management function network element. Specifically, for a specific implementation of creating or modifying the PDU session by the computing network converged function network element, refer to existing related descriptions, for example, a PDU session implementation in a 5G system. For brevity, details are not described herein.

It should be noted that, if the converged management function network element selects a plurality of computing network converged function network elements in step S402, each computing network converged function network element needs to repeatedly perform this step. For brevity, details are not described.

Optionally, after receiving the N4 request, the computing network converged function network element may determine, based on a load status of the computing network converged function network element, whether to accept a computing power service request. In other words, if the computing network converged function network element determines that the load of the computing network converged function network element is too large to support a computing power service list that the terminal device needs to invoke, the computing network converged function network element may refuse to create or modify a PDU session.

S4035: The converged management function network element sends the information about the N3 connection to the computing network converged function network element.

Correspondingly, the computing network converged function network element receives the information about the N3 connection from the converged management function network element. Based on completion of creation or modification of the PDU session, in response to the first computing power request in step S401, the converged management function network element needs to send the information about the computing network converged function network element to the terminal device, that is, performs step S403.

S403: The converged management function network element sends the information about the computing network converged function network element to the terminal device.

Correspondingly, the terminal device receives the information about the computing network converged function network element from the converged management function network element. Further, the terminal device sends the information about the computing network converged function network element to the application software; and when the application software needs to invoke a computing power service, the terminal device receives a second computing power request from the application software, where the second computing power request carries the information about the computing network converged function network element.

It should be noted that in actual transmission, the converged management function network element may send the information about the computing network converged function network element to the terminal device through forwarding by a third-party entity, and a message used to transmit the information about the computing network converged function network element may change. For example, the converged management function network element may transmit the information about the computing network converged function network element to the terminal device through a RAN and an AMF. Optionally, in a future network evolution process, this application does not exclude that the information about the computing network converged function network element does not pass through the AMF, but is directly sent to the terminal device through the RAN by using the information about the computing network converged function network element. A specific transmission path is not limited in this application.

In an implementation, the converged management function network element sends QoS flow information, for example, a packet filtering rule, to the terminal device. For example, the converged management function network element generates, based on the connection information of the computing network converged function network element, a packet filtering rule corresponding to a first data flow of the PDU session, that is, a packet filter corresponding to the QoS flow, places the packet filtering rule in the QoS rule (QoS rule), and sends the QoS rule to the terminal device. Correspondingly, the terminal device receives the packet filtering rule from the converged management function network element.

The QoS flow is controlled by the converged management function network element, and is created by using a PDU session creation and/or modification procedure.

In another implementation, the converged management function network element sends a first service identity to the terminal device. For example, the converged management function network element selects, in step S402, a plurality of computing network converged function network elements for a computing power service that the terminal device requests to invoke, for example, a first computing network converged function network element and a second computing network converged function network element. Further, the converged management function network element generates the first service identity, where the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point;

In other words, the first service identity may be an identifier of the N3 connection (a connection between the computing network converged function network element and the access network device), or may be an identifier of the N9 connection (a connection between the computing network converged function network element and the uplink classifier or the branching point).

In still another implementation, the converged management function network element sends a mapping relationship between the first data flow and a first N3 connection and a mapping relationship between the second data flow and a second N3 connection to the access network device. For example, the converged management function network element selects, in step S402, one computing network converged function network element for each of the plurality of computing power services that the terminal device requests to invoke. For example, the computing power services include a first computing power service and a second computing power service, the computing network converged function network element includes a first computing network converged function network element and a second computing network converged function network element, and the first computing network converged function network element can provide the first computing power service for the terminal device, and the second computing network converged function network element can provide the second computing power service for the terminal device. Further, the converged management function network element maps a communication connection between the terminal device and the first computing network converged function network element to the first data flow of the PDU session, where the first data flow corresponds to the first N3 connection, and the first N3 connection is a communication connection between the access network device and the first computing network converged function network element. The converged management function network element maps a communication connection between the terminal device and the second computing network converged function network element to the second data flow of the PDU session, where the second data flow corresponds to the second N3 connection, and the second N3 connection is a communication connection between the access network device and the second computing network converged function network element.

In still another implementation, the converged management function network element sends a mapping relationship between the first data flow and a first N3 connection and a mapping relationship between the second data flow and a second N3 connection to the access network device. For example, the computing power service includes a first computing power service and a second computing power service, and the computing network converged function network element can provide the first computing power service and the second computing power service for the terminal device. Further, the converged management function network element maps the first computing power service to the first data flow of the PDU session, and maps the second computing power service to the second data flow of the PDU session, where the first data flow and the second data flow are associated with a same N3 connection, and the N3 connection is a communication connection between the access network device and the computing network converged function network element.

Based on implementation of the foregoing steps, selection of the computing network converged function network element is completed, and modification or creation of the PDU session used for the communication connection between the terminal device and the computing network converged function network element is completed. Further, the terminal device may send a computing power request to the computing network converged function network element, to invoke a computing power service, thereby reducing a delay. Specifically, the following steps S404 to S406 are included.

S404: The terminal device sends the second computing power request to the access network device through the air interface bearer.

Correspondingly, the access network device receives the second computing power request from the terminal device through the air interface bearer.

The second computing power request includes the information about the computing network converged function network element, and the second computing power request is used to request the computing network converged function network element to provide the computing power service for the terminal device.

Optionally, before the terminal device sends the second computing power request through the air interface bearer, the terminal device sends the information about the computing network converged function network element to the application software; and the terminal device receives the second computing power request from the application software.

Optionally, before the terminal device sends the second computing power request through the air interface bearer, the access network device sends the mapping relationship between the air interface bearer and the computing power service to the terminal device. Correspondingly, the terminal device receives the mapping relationship between the air interface bearer and the computing power service from the access network device. Therefore, when determining that the computing power service needs to be invoked, the terminal device sends the second computing power request through the air interface bearer.

Optionally, the terminal device sends the second computing power request to the uplink classifier or the branching point through the air interface bearer. Correspondingly, the uplink classifier or the branching point receives the second computing power request from the terminal device through the air interface bearer.

In an implementation, the terminal device receives the packet filtering rule from the converged management function network element.

Optionally, before the terminal device sends the second computing power request through the air interface bearer, the access network device sends a mapping relationship between the air interface bearer and the first data flow to the terminal device. Correspondingly, the terminal device receives the mapping relationship between the air interface bearer and the first data flow from the access network device; and the terminal device determines the first data flow based on the packet filtering rule, to determine the air interface bearer. In other words, the packet filtering rule is used by the terminal device to subsequently select, based on a packet filter, a proper QoS flow to send the computing power request. Therefore, when determining that the computing power service needs to be invoked, the terminal device sends the second computing power request through the air interface bearer.

In another implementation, one computing power service that the terminal device requests to invoke corresponds to a plurality of computing network converged function network elements. Further, the terminal device receives the first service identity from the converged management function network element.

Optionally, before the terminal device sends the second computing power request through the air interface bearer, the access network device sends a mapping relationship between the first service identity and the air interface bearer to the terminal device. Correspondingly, the terminal device receives the mapping relationship between the first service identity and the air interface bearer from the access network device; and the terminal device determines the air interface bearer based on the first service identity. Therefore, when determining that the computing power service needs to be invoked, the terminal device sends the second computing power request through the air interface bearer.

Optionally, the computing network converged function network element may alternatively generate the first service identity. A specific implementation is similar to an implementation of the converged management function network element. For brevity, details are not described herein. In still another implementation, a plurality of computing power services that the terminal device requests to invoke one-to-one correspond to a plurality of computing network converged function network elements.

Optionally, before the terminal device sends the second computing power request through the air interface bearer, the access network device sends a mapping relationship between a first air interface bearer and the first data flow and a mapping relationship between a second air interface bearer and the second data flow to the terminal device. Correspondingly, the terminal device receives the mapping relationship between the first air interface bearer and the first data flow and the mapping relationship between the second air interface bearer and the second data flow from the access network device, where the first air interface bearer and the second air interface bearer belong to the air interface bearer.

Further, the terminal device sends the second computing power request to the access network device through the first data flow, where the second computing power request is used to request a first computing network converged function network element to provide a first computing power service; and the terminal device sends the second computing power request to the access network device through the second data flow, where the second computing power request is used to request a second computing network converged function network element to provide a second computing power service.

In still another implementation, a plurality of computing power services that the terminal device requests to invoke correspond to one computing network converged function network element.

Optionally, before the terminal device sends the second computing power request through the air interface bearer, the access network device sends a mapping relationship between the first data flow and the air interface bearer and a mapping relationship between the second data flow and the air interface bearer to the terminal device. Correspondingly, the terminal device receives the mapping relationship between the first data flow and the air interface bearer and the mapping relationship between the second data flow and the air interface bearer from the access network device.

Further, the terminal device sends the second computing power request to the access network device through the first data flow or the second data flow, where the second computing power request is used to request the computing network converged function network element to provide the first computing power service and the second computing power service.

S405: The access network device sends the second computing power request to the computing network converged function network element through the N3 connection.

Correspondingly, the computing network converged function network element receives the second computing power request from the access network device through the N3 connection.

Optionally, the uplink classifier or the branching point sends the second computing power request to the computing network converged function network element through the N9 connection. Correspondingly, the computing network converged function network element receives the second computing power request from the uplink classifier or the branching point through the N9 connection.

In an implementation, the access network device sends the mapping relationship between the air interface bearer and the first data flow to the terminal device. Optionally, when the terminal device sends the second computing power request through the first data flow, the access network device may determine the corresponding N3 connection based on the locally stored mapping relationship between the air interface bearer and the N3 connection and the air interface bearer for receiving the second computing power request in step S404, to send the second computing power request to the computing network converged function network element through the N3 connection, so that the computing network converged function network element determines to provide the computing power service based on the association relationship between the N3 connection and the computing power service.

In another implementation, one computing power service that the terminal device requests to invoke corresponds to a plurality of computing network converged function network elements. Further, the access network device sends the mapping relationship between the first service identity and the air interface bearer to the terminal device.

For example, the access network device receives the first service identity from the converged management function network element. Because the first service identity corresponds to a computing power service that the terminal device needs to invoke, and the first service identity is associated with an N3 connection between a first computing network converged function network element and the access network device and an N3 connection between a second computing network converged function network element and the access network device, the access network device may determine the corresponding N3 connection based on the first service identity carried in the second computing power request or through the air interface bearer for receiving the second computing power request, and select, based on current load information of the first computing network converged function network element and current load information of the second computing network converged function network element, a most appropriate computing network converged function network element (for example, the first computing network converged function network element) to provide a computing power service for the terminal device, to send the second computing power request to the first computing network converged function network element through the determined N3 connection, so that the first computing network converged function network element determines, based on an association relationship between the N3 connection and the computing power service, to provide the computing power service.

In still another implementation, a plurality of computing power services that the terminal device requests to invoke one-to-one correspond to a plurality of computing network converged function network elements. Further, the access network device sends a mapping relationship between a first air interface bearer and a first data flow and a mapping relationship between a second air interface bearer and a second data flow to the terminal device.

For example, the access network device receives the mapping relationship between the first data flow and the first N3 connection and the mapping relationship between the second data flow and the second N3 connection from the converged management function network element. Because a first computing network converged function network element can provide a first computing power service for the terminal device, a second computing network converged function network element can provide a second computing power service for the terminal device. Optionally, when the terminal device requests the first computing power service through the first data flow, the access network device may determine, based on the locally stored mapping relationship between the first air interface bearer and the first N3 connection, to send the second computing power request to the first computing network converged function network element through the first N3 connection, so that the first computing network converged function network element determines to provide the first computing power service based on the association relationship between the first N3 connection and the first computing power service. Optionally, when the terminal device requests the second computing power service through the second data flow, the access network device may determine, based on the locally stored mapping relationship between the second air interface bearer and the second N3 connection, to send the second computing power request to the second computing network converged function network element through the second N3 connection, so that the second computing network converged function network element determines to provide the second computing power service based on the association relationship between the second N3 connection and the second computing power service.

In still another implementation, a plurality of computing power services that the terminal device requests to invoke correspond to one computing network converged function network element. Further, the access network device sends the mapping relationship between the first data flow and the air interface bearer and the mapping relationship between the second data flow and the air interface bearer to the terminal device.

For example, the access network device receives a mapping relationship between a first data flow and an N3 connection and a mapping relationship between a second data flow and the N3 connection from the converged management function network element. Optionally, when the terminal device sends the second computing power request through the first data flow, the access network device may determine, based on the locally stored mapping relationship between the air interface bearer and the N3 connection, to send the second computing power request to the computing network converged function network element through the N3 connection, so that the computing network converged function network element determines to provide a first computing power service based on an association relationship between the N3 connection and the first computing power service.

S406: The computing network converged function network element provides the computing power service for the terminal device.

Optionally, before the computing network converged function network element provides the computing power service for the terminal device, the computing network converged function network element determines, based on load information of the computing network converged function network element, whether to provide the computing power service for the terminal device. It should be understood that when it is determined that the load of the computing network converged function network element can support the computing power service, the computing network converged function network element provides the computing power service for the terminal device.

According to the technical solution provided in this application, a process of selecting a computing network converged function network element is integrated with a process of selecting a communication node, so that the computing network converged function network element selected by the converged management function network element can well support the terminal device in invoking a computing power service, and a route carrying a computing power service request is created or modified before the terminal device sends a computing power request. In this way, when the terminal device needs to invoke the computing power service, the terminal device may perform communication routing according to a current communication mode, and reach the computing network converged function network element with a minimum delay, to obtain the computing power service, thereby simplifying a signaling exchange process, reducing a delay required in the entire process, and improving network communication efficiency.

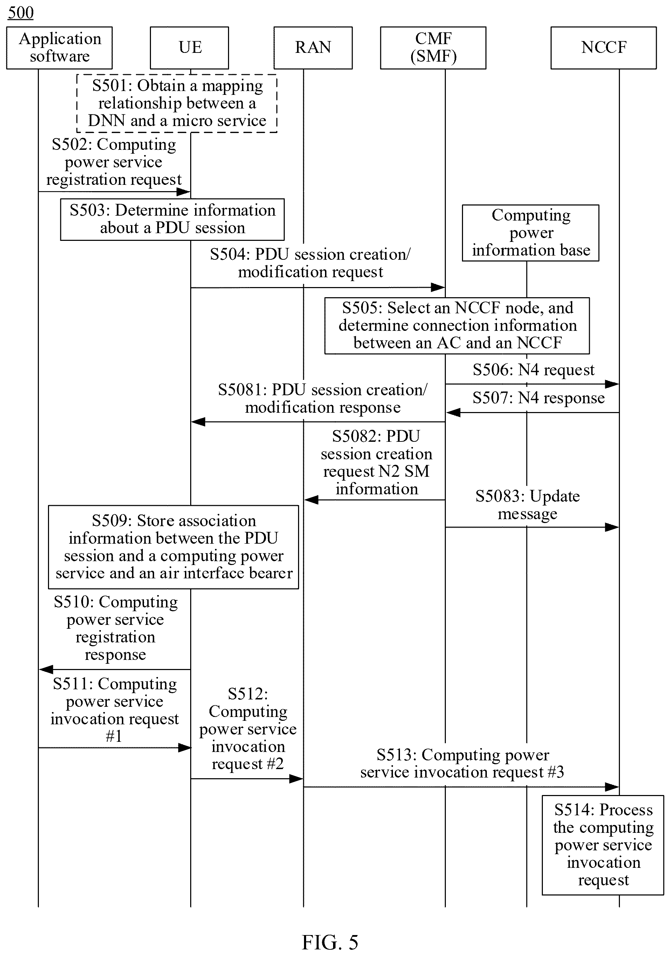

Next, with reference to FIG. 5 to FIG. 8, an example in which a terminal device is UE, a converged management function network element is a CMF (enhanced SMF), a computing network converged function network element is an NCCF, and an access network device is a RAN is used to describe creation of a radio bearer and selection of a computing network converged function network element in a scenario in which a computing node and a network node are converged.

FIG. 5 is a schematic flowchart of a communication method 500 according to an embodiment of this application. As shown in FIG. 5, the method includes the following plurality of steps.

S501: Optionally, UE obtains a mapping relationship between computing power service information and network connection information (for example, a DNN or a slice).

For example, the UE pre-obtains a table of a mapping relationship between a DNN and a computing power service from a network.

In this embodiment of this application, a service identity SID (for example, an anycast address) may be an identifier of a service, or may be an identifier of "computing power". The slice is a network slice, and a data network name/single network slice selection assistance information (Data Network Name/Single Network Slice Selection Assistance Information, DNN/S-NSSAI) may be an identifier of the slice. For example, a plurality of service instances with a same computing power type are grouped into one computing power slice, or all required computing power service instances serving an application are grouped into one computing power slice.

Further, the UE obtains information about one or more computing power services that need to be invoked by application software (an application client (app client, AC), application intermediate software, or an operating system).

For example, in S502, the application software sends a computing power service registration request to the UE. Correspondingly, the UE receives the computing power service registration request from the application software. The computing power service registration request includes computing power service information required by the application software, and is used to request one or more computing power services. The one or more computing power services may be carried in the computing power service registration request by using one piece of computing power service list information and sent to the UE.

S503: The UE determines information about a PDU session.

For example, the UE determines, based on the computing power service list information carried in the computing power service registration request and the mapping relationship between the computing power service information and the network connection information obtained in step S501, the information about the associated PDU session required for carrying the one or more computing power services.

It should be noted that, if step S501 is not performed, that is, the UE does not store the mapping relationship between the computing power service information and the network connection information, or if step S501 is performed, but the mapping relationship between the computing power service information and the network connection information obtained by the UE does not include the computing power service information required in step S502, the UE may trigger to obtain, from the network, the mapping relationship between the computing power service information required by the application software and the network connection information.

S504: The UE sends a PDU session creation request or a PDU session modification request (that is, an example of a first computing power request) to a CMF.

Correspondingly, the CMF receives the PDU session creation request or the PDU session modification request from the UE.

The CMF may be implemented based on an enhanced SMF. The PDU session creation/modification request carries the computing power service information required by the application software, for example, the computing power service list information.

Optionally, if the UE determines that the required PDU session already exists in step S503, the UE may send the PDU session modification request to the network (CMF). Otherwise, the UE may send the PDU session creation request to the CMF.

Optionally, the PDU session creation/modification request may further carry a computing power service indication, so that a core network node (CMF) can further distinguish between computing power services associated with the PDU session creation/modification request in step S504, which is different from a common PDU session creation/modification request.

It should be noted that in step S504, in actual transmission, the PDU session creation/modification request may be forwarded by a third entity, and a message for transmitting the PDU session creation/modification request may change. For example, the UE sequentially transmits the PDU session creation/modification request to the CMF through a RAN and an AMF. Specifically, after a NAS message including the PDU session creation/modification request arrives at the RAN, and is forwarded by the RAN to the AMF, the AMF re-encapsulates the PDU session creation/modification request into an interface message between the AMF and the CMF, and sends the interface message to the CMF. Optionally, this application does not exclude that in a future network evolution process, the PDU session creation/modification request does not pass through the AMF, but is directly sent by the UE to the CMF through the RAN.

S505: The CMF selects an NCCF node, and determines connection information between the application software and the NCCF.

For example, after receiving the PDU session creation/modification request from the UE, the CMF needs to obtain and select associated NCCF node information that can support the computing power service information that is required by the application software and that is carried in the PDU session creation/modification request. For example, the CMF queries a computing power information base that is in a storage network and that supports a computing power service, to obtain, from the computing power information base, NCCF node information that can match (support) the computing power service list information that is required by the application software and that is carried in the PDU session creation/modification request.

The NCCF node information includes a node address and/or identification information required for the connection between the application software and the NCCF node. Optionally, the NCCF node information further includes load (load) information. A granularity of the load information may be an overall load status of the NCCF node, or may be a load status corresponding to each computing power service supported by the NCCF.

It should be understood that, when selecting an NCCF node, the CMF needs to comprehensively consider a communication route and a computing power service capability supported by the NCCF node. Optionally, the CMF needs to select an NCCF node with an appropriate load based on the NCCF load information.

Further, the CMF needs to obtain a computing power resource required by the computing power service requested by the UE, and select an NCCF node based on the computing power resource required by the computing power service.

Optionally, the CMF may select, for each computing power service requested by the application software, one or more candidate NCCF nodes that can support the computing power service. This is not specifically limited in this application.

S506: The CMF sends an N4 request to the NCCF. Correspondingly, the NCCF receives the N4 request from the CMF.

The N4 request is used to request to create or modify a PDU session used for a computing power service.

Optionally, the N4 request carries a computing power service list indication and/or computing power service list information required by the application software.

S507: The NCCF sends an N4 response to the CMF. Correspondingly, the CMF receives the N4 response from the NCCF.

For a specific implementation of creating or modifying the PDU session in S506 and S507, refer to existing related descriptions, for example, a PDU session implementation in a 5G system. For brevity, details are not described herein.

It should be noted that, if the CMF does not consider, in step S505, the load status of the NCCF when selecting the NCCF node, or the load status of the NCCF changes, after receiving the N4 request in step S506, the NCCF may further determine whether a computing power service request can be received.

Optionally, if the CMF selects a plurality of candidate NCCF nodes in step S505, steps S506 and S507 need to be repeatedly performed a plurality of times for each candidate NCCF node.

S5081: The CMF sends a PDU session creation/modification response to the UE. Correspondingly, the UE receives the PDU session creation/modification response from the CMF.

The PDU session creation/modification response carries connection information of the selected NCCF node, for example, an IP address and/or a port number, or an identifier of the NCCF node. The PDU session creation/modification response may further carry QoS flow information.

Optionally, the CMF may further generate, based on the connection information of the selected NCCF node, a packet filter corresponding to the QoS flow, place the packet filter to a QoS rule, and send the QoS rule to the UE. It should be understood that the QoS flow is controlled by the CMF, and is created by using a PDU session creation and/or modification procedure. Each PDU session requires a QoS flow associated with a default QoS rule. The QoS flow remains in the entire life cycle of the PDU by default. A QoS configuration on the RAN side is provided by the CMF for the RAN through the AMF, or is (pre)configured on the RAN. The QoS rule (rule) on the UE side is provided by the CMF for the UE in the PDU creation or modification procedure, or is derived by the UE through a reflective QoS mechanism.

S5082: The CMF sends a PDU session creation request N2 SM message to the RAN. Correspondingly, the RAN receives the PDU session creation request N2 SM message from the CMF.

The PDU session creation request N2 SM message is used to request to create an N3 connection and an air interface connection that are required for requesting to create a connection between the UE and the NCCF.

It should be noted that a sending manner of the PDU session response N1 SM and the N2 SM (session management) in step S5081 and step S5082 corresponds to a sending path of the PDU session creation and/or modification request in step S504. For example, step S5081 and step S5082 may be that the CMF first sends the N1 SM and the N2 SM to the AMF by using the interface message between the CMF and the AMF, and then the AMF sends the N1 SM and the N2 SM to the RAN by using the interface message between the AMF and the RAN. Then, the RAN processes the N2 SM part, and further places the N1 SM to an air interface and sends the N1 SM to the UE. Optionally, if the CMF selects, in step S505 for each computing power service requested by the application software, a plurality of candidate NCCF nodes that can support the computing power service, in step S5082, the CMF may provide, for the RAN, information about the plurality of candidate NCCF nodes corresponding to one PDU session, including corresponding N3 connection information for a connection between each candidate NCCF node and the RAN; and similarly, in step S5081, the PDU session response message provided by the CMF for the UE may not carry connection information of a specific NCCF node. In this case, the RAN may allocate an air interface bearer in an existing mapping manner in which PDU sessions are in one-to-one correspondence with air interface bearers (the PDU sessions are associated with the air interface bearers), and record the air interface bearer and information about a plurality of candidate NCCF nodes corresponding to the PDU session.

S5083: After steps S5081 and S5082, the CMF needs to send an update message to the NCCF. Correspondingly, the NCCF receives the update message from the CMF.

The update message includes N3 connection information used to connect the UE to the NCCF.

S509: The UE stores association information between the PDU session and the computing power service and the air interface bearer.

Further, the UE sends, to the application software, information about an NCCF node that can provide a computing power service.

For example, in S510, the UE sends a computing power service registration response to the application software. Correspondingly, the application software receives the computing power service registration response from the UE.

The computing power service registration response includes NCCF node information (for example, an IP address and/or a port required for a node connection), and an association relationship between connection information of the NCCF node and the computing power service.

It should be noted that, if the computing power service list information requested by the application software is associated with a plurality of PDU sessions in step S501, similar operations need to be separately performed on the plurality of PDU sessions in steps S503 to S5082, and the UE obtains connection information of a plurality of NCCF nodes. In this case, the computing power service registration response message sent by the UE to the application software in step S510 needs to carry the connection information of the plurality of NCCF nodes, and an association relationship between connection information of each NCCF node and a corresponding computing power service.

S511: The application software sends a computing power service invocation request #1 to the UE. Correspondingly, the UE receives the computing power service invocation request #1 from the application software.

The computing power service invocation request #1 includes the connection information of the NCCF node, and is used to request a computing power service, for example, an APP 1, from the NCCF. The connection information of the NCCF node may be an IP address and/or a port number of the NCCF node, and the IP address and/or the port number may be a special value. This is not specifically limited in this application.

For example, based on an association relationship between a computing power service and NCCF node information obtained by the application software, when determining that a computing power service needs to be invoked, the application software sends the computing power service invocation request #1 to the UE, and adds, to the computing power service invocation request #1, address information of an NCCF corresponding to the required computing power service.

S512: The UE sends a computing power service invocation request #2 to the RAN. Correspondingly, the RAN receives the computing power service invocation request #2 (an example of a second computing power request) from the UE.

The computing power service invocation request #2 includes the connection information of the NCCF node, and is used to request the computing power service, for example, the APP 1, from the NCCF.

For example, after receiving the computing power service invocation request #1, the UE may send the computing power service invocation request #2 to the RAN based on an uplink bearer corresponding to the PDU session in an existing data sending mode.

S513: The RAN sends a computing power service invocation request #3 to the NCCF. Correspondingly, the NCCF receives the computing power service invocation request #3 (an example of the second computing power request) from the RAN.

The computing power service invocation request #3 includes the connection information of the NCCF node, and is used to request the computing power service, for example, the APP 1, from the NCCF.

For example, after receiving the computing power service invocation request #2, the RAN may obtain a mapping relationship between an air interface bearer and N3 according to an existing implementation, and send the computing power service invocation request #3 to the NCCF node by using the corresponding N3.

Optionally, if the CMF selects, in step S505 for each computing power service requested by the application software, a plurality of candidate NCCF nodes that can support the computing power service, based on the information about the plurality of candidate NCCF nodes corresponding to the air interface bearer and the PDU session recorded in step S5082, including the mapping relationship between each candidate NCCF node and corresponding N3 connection information, the RAN may determine, based on actual load statuses and priorities of the plurality of candidate NCCF nodes, to select, from candidate N3 connections, a final forwarding path used to forward the computing power service request.

S514: The NCCF processes the computing power service invocation request.

For example, after receiving the computing power service invocation request #3, the NCCF provides the corresponding computing power service, for example, the APP 1, for the application software.

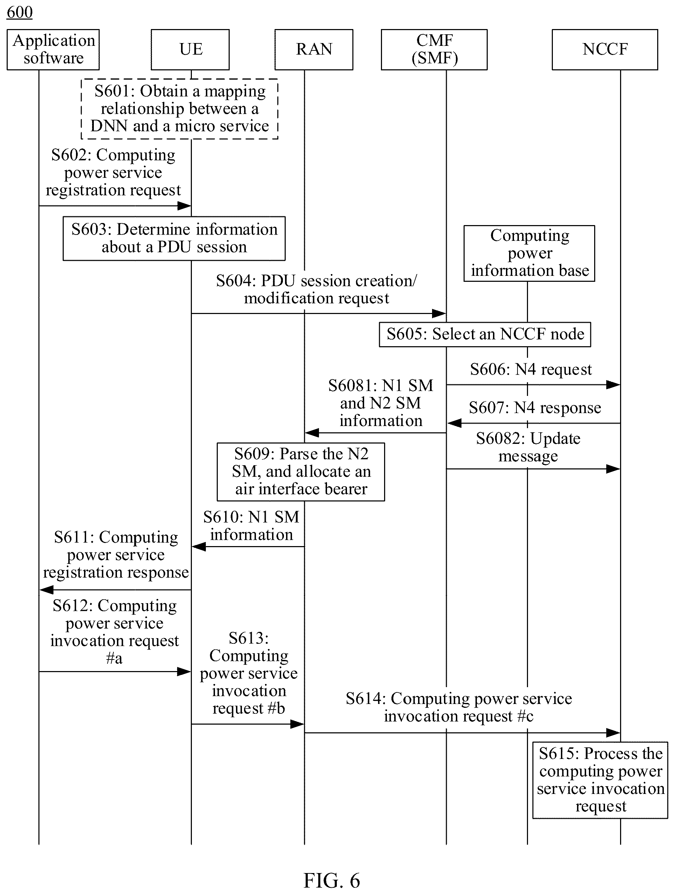

According to the technical solution of this application, a process of selecting a computing service node NCCF is integrated with a process of selecting a communication node. When selecting an NCCF node, the CMF comprehensively considers a communication route and NCCF node information, for example, a computing power service capability and a load that can be supported by the NCCF node, and a computing power requirement of the application software, so that the selected NCCF node can well support a computing power service request of the UE, and a route carrying the computing power service request is determined before the computing power service request. In this way, when the UE really needs to invoke a network computing power service, the UE may perform communication routing according to a current communication mode, and reach the computing power node with a minimum delay, thereby simplifying signaling exchange, reducing a delay required in the entire process, and improving network communication efficiency. FIG. 6 is a schematic flowchart of a communication method 600 according to an embodiment of this application. As shown in FIG. 6, the method includes the following plurality of steps.

S601: Optionally, UE obtains a mapping relationship between computing power service information and network connection information (for example, a DNN or a slice).

Further, the UE obtains computing power service list information required by application software. For example, in S602, the application software sends a computing power service registration request including a computing power service list to the UE. Correspondingly, the UE receives the computing power service registration request from the application software.

S603: The UE determines information about a PDU session.

S604: The UE sends a PDU session creation/modification request (that is, an example of a first computing power request) to a CMF.

Correspondingly, the CMF receives the PDU session creation/modification request from the UE. For specific implementations of steps S601 to S604, refer to steps S501 to S504 in the method 500. For brevity, details are not described herein.

S605: The CMF selects an NCCF node.

For example, after receiving the PDU session creation/modification request from the UE, the CMF may select a plurality of different NCCF nodes for different computing power services in a computing power service request of the UE based on a status of a node that supports a computing power service requested by the UE. For example, the CMF queries a computing power information base in a storage network, to obtain, from the computing power information base, information about a plurality of different NCCF nodes that can match (support) the computing power service that is required by the application software and that is carried in the PDU session creation/modification request.

The NCCF node information includes a node address and/or identification information required for a connection between the application software and the NCCF node. Optionally, the NCCF node information further includes load (load) information. A granularity of the load information may be an overall load status of the NCCF node, or may be a load status corresponding to each computing power service supported by the NCCF.

Optionally, different computing power services on each NCCF node may share (map to) a same QoS flow, or may not share a same QoS flow. Optionally, the CMF may further generate, based on connection information of the selected NCCF node, a packet filter corresponding to the QoS flow.

It should be understood that, when selecting an NCCF node, the CMF needs to comprehensively consider a communication route and a computing power service capability supported by the NCCF node. In addition, the CMF may further select the NCCF node based on the load information of the NCCF node and a computing power resource required by the computing power service of the application software.

Optionally, the CMF may select, for each computing power service requested by the application software, one or more candidate NCCF nodes that can support the computing power service. This is not specifically limited in this application. In an example, the CMF allocates an independent QoS flow to each computing power service on each NCCF node, and QoS flows associated with a same computing power service may be associated with each other in a specific manner, and priorities may be determined. For example, if a computing power service 1 is associated with both a QoS flow 1 and a QoS flow 2, it may be determined, based on a current existing related solution, that a priority of the QoS flow 1 is higher than that of the QoS flow 2. In this case, when the computing power service 1 is subsequently invoked, the QoS flow 1 may be preferentially selected for transmission and service.

For another example, QoS flows corresponding to different computing power services on a same NCCF node share one N3 channel. For example, if a computing power service 1 supported by an NCCF node corresponds to a QoS flow 1, and a computing power service 2 supported by the NCCF node corresponds to a QoS flow 2, the QoS flow 1 and the QoS flow 2 share one N3 connection channel.

S606: The CMF sends an N4 request to the NCCF. Correspondingly, the NCCF receives the N4 request from the CMF.

S607: The NCCF sends an N4 response to the CMF. Correspondingly, the CMF receives the N4 response from the NCCF.

For specific implementations of PDU session creation or modification in S606 and S607, refer to the related descriptions in steps S506 and S507 in the method 500. For brevity, details are not described herein.

S6081: The CMF sends an N1 SM message and an N2 SM message to the RAN.

Correspondingly, the RAN receives the N1 SM message and the N2 SM message from the CMF. For example, the CMF assembles an N1 container and an N2 container. The N1 SM message is a PDU session response message sent to the UE, and carries the connection information of the NCCF node and QoS flow information corresponding to a connection between the UE and the NCCF. The N2 SM message is sent to the RAN, and carries PDU session information, one or more QoS flow identifiers, and N3 connection information corresponding to each QoS flow.

It should be understood that, to support selection of different NCCF nodes for a same PDU session, different QoS flows of the same PDU session may be mapped to different NCCF nodes, and are associated with N3 connection information corresponding to each NCCF node.

Optionally, the N2 SM message may further include indication information related to a computing power service, so that the RAN learns that a plurality of N3 connections corresponding to one PDU session are used to create a computing service node connection, or are used to distinguish between a plurality of N3 connections corresponding to another PDU session.

Optionally, in actual transmission, the message in step S6081 may be re-encapsulated by a third entity such as the AMF and sent to the RAN, or may be directly sent to the RAN by the CMF. This is not limited in this application.

Optionally, based on step S605, the CMF may provide, for the RAN, a QoS flow list of each computing power service on a plurality of candidate NCCF nodes, and a mapping relationship between a QoS flow and N3 connection information. In this case, the RAN may allocate a dedicated air interface bearer to a QoS flow list corresponding to each computing power service.

S6082: After step S6081, the CMF needs to send an update message to the NCCF. Correspondingly, the NCCF receives the update message (that is, the N3 connection information) from the CMF.

For a specific implementation, refer to step S5083. For brevity, details are not described herein.

S609: The RAN parses the N2 SM message, and allocates an air interface bearer.

For example, after receiving a message including the N1 container and the N2 container, the RAN parses a part of content of the N2 SM. The RAN allocates the air interface bearer based on the PDU session, the QoS flow, and the mapping relationship between the QoS flow and the N3 that are carried in the N2 SM, to ensure that one air interface bearer corresponds to one N3, or one air interface bearer is used to transmit a QoS flow corresponding to a same N3.

S610: The RAN sends the N1 SM message to the UE. Correspondingly, the UE receives the N1 SM message from the RAN.

The N1 SM message is a PDU session response message, and the PDU session response message carries the connection information of the NCCF node and the QoS flow information corresponding to the connection between the UE and the NCCF. For example, the RAN may forward, to the UE by using RRC signaling, the connection information of the NCCF node and the QoS flow information corresponding to the connection between the UE and the NCCF.

Optionally, in the PDU session response message sent by the RAN to the UE, first-priority NCCF node connection information may be provided for the computing power service requested by the application software, and only QoS flow information corresponding to the first-priority NCCF node connection information may be provided for the UE. Alternatively, the PDU session response message sent by the RAN to the UE may further carry other special service identity information of the NCCF node, and the special service identity information is added to a packet filter of a corresponding QoS flow, so that when receiving a computing power service invocation request in subsequent step S612, the UE may determine a correct QoS flow based on the computing power service required by the application software, further determine a correct air interface bearer, and send the correct QoS flow to the RAN through the air interface bearer, to improve network communication efficiency.

Further, the UE sends NCCF node information corresponding to a computing power service to the application software.

For example, in S611, the UE may send a registration response to the application software. Correspondingly, the application software receives the computing power service registration response from the UE.

The computing power service registration response includes NCCF node information (for example, an IP address and/or a port required for a node connection), and/or an association relationship between connection information of the NCCF node and the computing power service.

S612: The application software sends a computing power service invocation request #a to the UE. Correspondingly, the UE receives the computing power service invocation request #a from the application software.

S613: The UE sends a computing power service invocation request #b to the RAN. Correspondingly, the RAN receives the computing power service invocation request #b (an example of a second computing power request) from the UE.

For example, the UE determines the QoS flow based on the connection information of the NCCF node that is carried in the computing power service invocation request #a, and then selects a corresponding air interface bearer based on the mapping relationship between the QoS flow and the air interface bearer to send the computing power service invocation request #b.

S614: The RAN sends a computing power service invocation request #c to the NCCF. Correspondingly, the NCCF receives the computing power service invocation request #c (an example of the second computing power request) from the RAN.

For example, based on step S6081, after receiving the computing power service invocation request #b, the RAN may determine candidate next-hop N3 information based on the QoS flow list to which the air interface bearer and the computing power service are mapped, and the mapping relationship between the QoS flow list and the N3 connection information. In addition, the RAN finally determines, based on actual load statuses and priorities of a plurality of candidate NCCF nodes, an NCCF node of a current computing power service and a corresponding N3 channel, and sends the computing power service invocation request #c to the NCCF.

The computing power service invocation request #a, the computing power service invocation request #b, and the computing power service invocation request #c in steps S612 to S614 include the connection information of the NCCF node (for example, an address of the NCCF node), and are used to request a computing power service, for example, an APP 1, from the NCCF.

S615: The NCCF processes the computing power service invocation request.

For specific implementations of steps S612 to S615, refer to the related descriptions in steps S511 to S514 in the method 500. For brevity, details are not described herein.

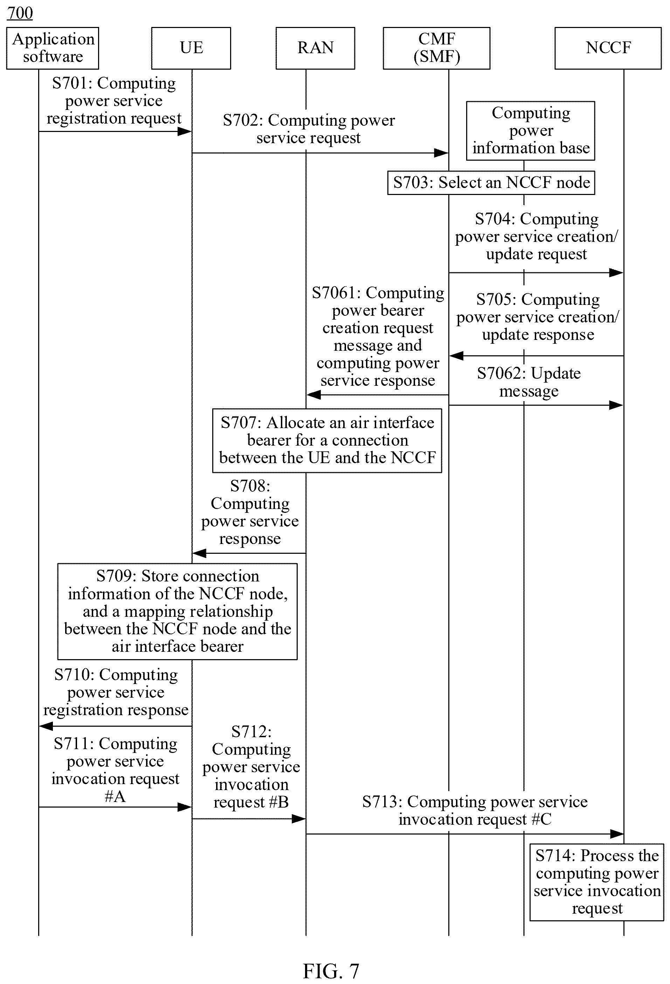

According to the technical solution of this application, a process of selecting a computing service node NCCF is integrated with a process of selecting a communication node. When selecting an NCCF node, the CMF comprehensively considers a communication route and NCCF node information, for example, a computing power service capability and a load that can be supported by the NCCF node, and a computing power requirement of the application software, so that the selected NCCF node can well support a computing power service request of the UE, and a route carrying the computing power service request is determined before the computing power service request. In this way, when the UE really needs to invoke a network computing power service, the UE may perform communication routing according to a current communication mode, and reach the computing power node with a minimum delay, thereby simplifying signaling exchange, reducing a delay required in the entire process, and improving network communication efficiency. FIG. 7 is a schematic flowchart of a communication method 700 according to an embodiment of this application. As shown in FIG. 7, the method includes the following plurality of steps.

First, UE needs to obtain computing power service list information required by application software (for example, an AC/application intermediate layer software/operating system).

For example, in S701, the application software sends a computing power service registration request carrying a computing power service list to the UE. Correspondingly, the UE receives the computing power service registration request from the application software.

S702: The UE sends a computing power service request to a CMF. Correspondingly, the CMF receives the computing power service request from the UE.

Optionally, in an actual transmission process, the computing power service request may be forwarded to the CMF through one or more nodes, for example, a RAN or a core network service ingress network element.

S703: The CMF selects an NCCF node.

For a specific implementation, refer to the related descriptions in step S605 in the method 600. For brevity, details are not described herein.

For example, the NCCF node information includes a node address and/or identification information required for a node connection. Optionally, the NCCF node information may further include load information.

Optionally, the CMF may select, based on a status of a node that supports a computing power service requested by the UE, one or more NCCF nodes that support the computing power service. Further, when the CMF selects a plurality of NCCF nodes for a computing power service, the CMF may sort priorities of the plurality of NCCF nodes. Therefore, when the UE subsequently requests the computing power service, the CMF determines, based on the priorities, that the NCCF node provides the computing power service for the UE.

S704: The CMF sends a computing power service creation/update request to the NCCF. Correspondingly, the NCCF receives the computing power service creation/update request from the CMF.

S705: The NCCF sends a computing power service creation/update response to the CMF. Correspondingly, the UE receives the computing power service creation/update response from the NCCF.

That is, steps S704 and S705 are a process in which the CMF and the NCCF exchange the computing power service request. For a specific implementation, refer to the related descriptions in steps S606 and S607 in the method 600. For brevity, details are not described herein. Optionally, in step S703, if the CMF does not consider the load status of the node when selecting the NCCF node, or the load status changes, after receiving the computing power service creation/update request from the CMF, the NCCF needs to further determine whether the computing power service request of the UE can be received.

Optionally, a data transmission channel of each node (per node) may be created between the NCCF and the RAN. For example, data transmission between the NCCF and different UEs may be distinguished by an N3 user computing power flow identifier between the NCCF and the RAN. The N3 user computing power flow identifier may be allocated by the CMF, or may be allocated by the NCCF. In this embodiment of this application, the user computing power flow identifier is associated with the computing power service requested by the terminal device.
(1) If the allocation is performed by the CMF, before the CMF interacts with the NCCF, the CMF further needs to determine whether the RAN connected to the UE already has information about a data transmission connection channel with the NCCF. If the data transmission connection channel between the RAN and the NCCF already exists, a flow identifier used for communication between the UE and the NCCF is allocated based on the original data connection channel, and the CMF sends the computing power service update request to the NCCF in step S704, where the computing power service update request carries information about a RAN data transmission connection channel and information about a user computing power flow identifier corresponding to the UE. For example, UE 1 corresponds to a user computing power flow identifier 1, and UE 2 corresponds to a user computing power flow identifier 2.
(2) If the allocation is performed by the NCCF, before the CMF interacts with the NCCF, the CMF further determines whether the RAN connected to the UE already has information about a data transmission connection channel with the NCCF. If the data transmission connection channel between the RAN and the NCCF already exists, the CMF sends the computing power service update request to the NCCF in step S704, where the computing power service update request carries information about a RAN data transmission connection channel and information about a UE identifier. After checking the UE identifier, the NCCF determines to allocate a corresponding N3 user computing power flow identifier to the UE, and sends the N3 user computing power flow identifier to the CMF in the computing power service creation/update response in step S705.

Optionally, if the CMF stores an NCCF that has been previously selected for another computing power service request, the NCCF may still provide a service for the new computing power service request of the UE, and steps S704 and S705 may not be performed.

S7061: The CMF sends a computing power bearer creation request and a computing power service response to the RAN. Correspondingly, the RAN receives the computing power bearer creation request and the computing power service response from the NCCF.

The computing power bearer creation request carries information about a data connection channel (or referred to as an N3 connection or an N3 channel) between the RAN and the NCCF, and an N3 user computing power flow identifier. Optionally, the computing power bearer creation request may further include a computing power service indication, and/or service identity information of the UE and the NCCF.

The computing power service response is sent to the UE, and the computing power service response message includes connection information of the NCCF node, for example, information such as a service identity and/or an address of the UE and the NCCF.

Optionally, the service identity and/or address information of the UE and the NCCF may be generated by the CMF, or may be generated after the NCCF receives the request message of the CMF in step S704, and carried in the response message in step S705 and sent to the CMF. Optionally, the service identity of the UE and the NCCF may be the same as or different from the N3 user computing power flow identifier. This is not limited in this application.

It should be noted that the computing power bearer creation request and the computing power service response in step S7061 may be forwarded to the RAN through one or more nodes, for example, a core network service ingress network element AMF; or may be directly sent to the RAN through an interface between the CMF and the RAN.

Optionally, if the CMF selects, in step S703, a plurality of NCCF nodes for each computing power service requested by the application software, the CMF may provide the RAN with association information of the plurality of NCCF nodes corresponding to each computing power service. For example, the CMF allocates a same NCCF service identity to connections of each computing power service on different NCCF nodes, and associates N3 connections corresponding to different NCCF nodes with the same NCCF service identity.

S707: The RAN allocates an air interface bearer for a connection between the UE and the NCCF. S708: The RAN sends a computing power service response to the UE. Correspondingly, the UE receives the computing power service response from the RAN.

For example, the RAN sends the computing power service response to the UE by using RRC signaling, where the computing power service response carries the connection information of the NCCF and the air interface bearer corresponding to the connection between the UE and the NCCF. Optionally, the RAN allocates an air interface bearer for a connection between each UE and the NCCF. For example, after receiving the computing power bearer creation request, the RAN creates a dedicated bearer for the connection between each UE and the NCCF, and stores a mapping relationship between the NCCF connection and the N3 channel and the user computing power flow identifier.

Optionally, based on the CMF selecting the plurality of NCCF nodes for each computing power service in step S703, connections between the UE associated with the computing power service and different NCCF nodes may be mapped to a same air interface bearer. For example, if the CMF selects nodes NCCF 1 and NCCF 2 for a computing power service 1 requested by the UE, a connection between the UE and the NCCF 1 and a connection between the UE and the NCCF 2 may be mapped to a same air interface bearer 1. Therefore, based on steps S7061 and S707, the RAN may determine that computing power services are in one-to-one correspondence with air interface bearers, and may determine one or more NCCF nodes corresponding to the computing power service and an N3 connection associated with each NCCF node.

S709: The UE stores the connection information of the NCCF node and a mapping relationship between the NCCF node and the air interface bearer.

Further, the UE sends, to the application software, information about an NCCF node that can provide a computing power service.

For example, in S710, the UE may send a computing power service registration response to the application software. Correspondingly, the application software receives the computing power service registration response from the UE.

S711: The application software sends a computing power service invocation request #A to the UE. Correspondingly, the UE receives the computing power service invocation request #A from the application software.

S712: The UE sends a computing power service invocation request #B to the RAN. Correspondingly, the RAN receives the computing power service invocation request #B from the UE.

For example, based on step S709, the UE selects a corresponding air interface bearer based on the NCCF connection information carried in the computing power service invocation request #A, and sends the computing power service invocation request #B to the RAN through the air interface bearer.

S713: The RAN sends a computing power service invocation request #C to the NCCF. Correspondingly, the NCCF receives the computing power service invocation request #C from the RAN.

Optionally, the RAN forwards the computing power service invocation request #C to a corresponding NCCF node based on the mapping relationship between the air interface bearer and the N3 connection in step S707, finally determines one N3 connection as a next hop based on real-time load information of the NCCF node, and sends the computing power service invocation request #C to the NCCF through the N3 connection.

In another possible implementation, the RAN reads the connection information of the NCCF node from the computing power service invocation request #B, forwards the computing power service invocation request #C to a corresponding NCCF node based on the mapping relationship between the connection information of the NCCF node and N3, finally determines one N3 connection as a next hop based on real-time load information of the NCCF node, and sends the computing power service invocation request #C to the NCCF through the N3 connection.

S714: The NCCF processes the computing power service invocation request.

For specific implementations of steps S711 to S714, refer to the related descriptions in steps S612 to S615 in the method 600. For brevity, details are not described herein.

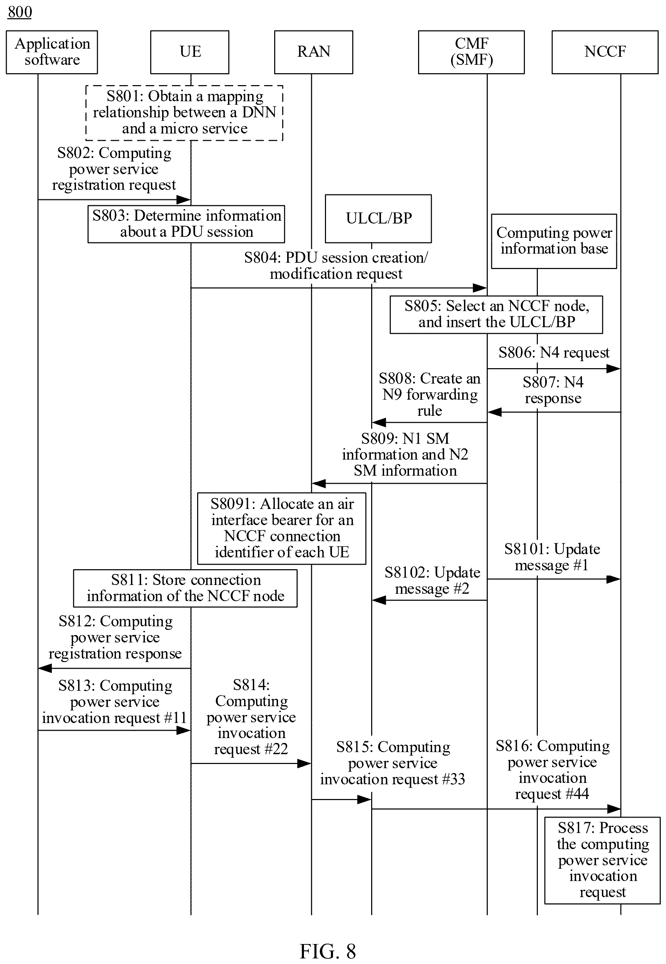

According to the technical solution of this application, a process of selecting a computing service node NCCF is integrated with a process of selecting a communication node. When selecting an NCCF node, the CMF comprehensively considers a communication route and NCCF node information, for example, a computing power service capability and a load that can be supported by the NCCF node, and a computing power requirement of the application software, so that the selected NCCF node can well support a computing power service request of the UE, and a route carrying the computing power service request is determined before the computing power service request. In this way, when the UE really needs to invoke a network computing power service, the UE may perform communication routing according to a current communication mode, and reach the computing power node with a minimum delay, thereby simplifying signaling exchange, reducing a delay required in the entire process, and improving network communication efficiency. FIG. 8 is a schematic flowchart of a communication method 800 according to an embodiment of this application. As shown in FIG. 8, the method includes the following plurality of steps.

S801: Optionally, UE obtains a mapping relationship between computing power service information and network connection information (for example, a DNN or a slice).

Further, the UE obtains computing power service list information required by application software (for example, an AC/application intermediate layer software/operating system).

For example, in S802, the application software sends a computing power service registration request to the UE. Correspondingly, the UE receives the computing power service registration request from the application software.

S803: The UE determines information about a PDU session.

S804: The UE sends a PDU session creation/modification request (that is, an example of a first computing power request) to a network side, including a CMF.

Correspondingly, the CMF receives the PDU session creation/modification request from the UE. For specific implementations of steps S801 to S804, refer to steps S501 to S504 in the method 500. For brevity, details are not described herein.

S805: The CMF selects an NCCF node, and inserts a ULCL/BP.

For a specific implementation in which the CMF selects the NCCF node for the computing power service requested by the application software, refer to step S505 in the method 500. For brevity, details are not described herein. Optionally, when selecting an NCCF node, the CMF needs to comprehensively consider a communication route, a computing power service capability and load information supported by the NCCF node, and a computing power requirement. Optionally, if the CMF does not consider load information of an NCCF when selecting the NCCF node, after receiving an N4 request in step S806 subsequently, the NCCF may determine, based on the load information of the NCCF, whether to receive the computing power service request.

Optionally, the CMF may select, based on a status of a node that supports a computing power service requested by the UE, one or more NCCF nodes that support the computing power service. Further, when the CMF selects a plurality of NCCF nodes for a computing power service, the CMF may sort priorities of the plurality of NCCF nodes. Therefore, when the UE subsequently requests the computing power service, the CMF determines, based on the priorities, that the NCCF node provides the computing power service for the UE.

Further, the CMF uses the selected one or more NCCF nodes as PSAs, and determines to insert the ULCL/BP. For a specific implementation of inserting the ULCL/BP, refer to step S202 in the method 200. For brevity, details are not described herein.

S806: The CMF sends an N4 request to the one or more NCCF nodes. Correspondingly, the NCCF receives the N4 request from the CMF.

S807: The NCCF sends an N4 response to the CMF. Correspondingly, the CMF receives the N4 response from the NCCF.

For specific implementations of steps S806 and S807, refer to steps S506 and S507 in the method 500. For brevity, details are not described herein.

S808: The CMF creates an N9 forwarding rule with the ULCL/BP.

For example, according to an existing procedure, the ULCL/BP is inserted, an N9 connection is created, and a forwarding rule is configured. For example, the CMF generates the forwarding rule based on the connection information of the NCCF node selected in step S805. For example, the connection information of the NCCF node may be an IP address and/or a port number used to provide the computing power service for the UE.

Optionally, the connection information of the NCCF node may be obtained by the CMF from a computing power information base in step S805, or may be generated by the NCCF node after step S806, and is carried in the N4 response message in step S807 and sent to the CMF.

Optionally, the CMF provides association information (for example, an NCCF service identity) of an NCCF node corresponding to each computing power service for the BP/ULCL.

Optionally, the CMF may select one or more NCCF nodes for each computing power service.

In an example, the CMF allocates a same service identity to connections of each computing power service on different NCCF nodes, associates N9 connections of different candidate NCCF nodes with the same service identity, and sends the same service identity to the ULCL/BP for storage. Based on this, a same computing power service may have one or more NCCF nodes corresponding to a same service identity, and N9 connections connected to each NCCF are associated with a same service identity.

S809: The CMF sends an N1 SM message and an N2 SM message to the RAN. Correspondingly, the RAN receives the N1 SM message and the N2 SM message from the CMF.

For example, the CMF assembles an N1 container and an N2 container. The N1 SM message is a PDU session response message sent to the UE, and carries connection information of one or more NCCF nodes, such as an IP address and a port number. The NCCF node information corresponds to the computing power service requested by the UE. Optionally, the PDU session response message may further carry an NCCF service identity or other service identity information. The N2 SM message is sent to the RAN, and is an N2 SM creation or modification message. The N2 SM message carries N3 connection information. Optionally, the N2 SM message further includes an NCCF service identity corresponding to each computing power service. For a specific implementation, refer to an existing PDU session creation/modification procedure. For brevity, details are not described herein. Optionally, the N2 SM message may further include indication information related to a computing power service, so that the RAN learns that a plurality of N3 connections corresponding to one PDU session are used to create a computing service node connection.

Optionally, in actual transmission, the message in step S809 may be re-encapsulated by a third entity such as the AMF and sent to the RAN, or may be directly sent to the RAN by the CMF. This is not limited in this application.

S8091: The RAN allocates a dedicated air interface bearer to an NCCF service identity associated with each UE; or the RAN allocates an air interface bearer to each PDU session of the UE.

S8101: The CMF sends an update message #1 to the NCCF. Correspondingly, the NCCF receives the update message #1 (that is, an example of the N3 connection information) from the CMF.

S8102: The CMF sends an update message #2 to the ULCL/BP. Correspondingly, the ULCL/BP receives the update message #2 from the CMF.

The update message #1 or the update message #2 is used to request the NCCF or the ULCL/BP to update address information of a downlink receive channel, for example, update address information of the RAN.

S811: The UE stores the connection information of the NCCF node.

Further, the UE sends, to the application software, information about an NCCF node that can provide a computing power service requested by the terminal device.

For example, in S812, the UE sends a registration response including the NCCF information to the application software. Correspondingly, the application software receives the computing power service registration response from the UE.

S813: The application software sends a computing power service invocation request #11 to the UE. Correspondingly, the UE receives the computing power service invocation request #11 from the application software.

For example, the UE determines a corresponding PDU session based on a request of the application software, determines an air interface bearer, and sends a computing power service invocation request #22 to the RAN through the determined air interface bearer.

S814: The UE sends a computing power service invocation request #22 to the RAN. Correspondingly, the RAN receives the computing power service invocation request #22 (an example of a second computing power request) from the UE.

For example, when receiving the computing power service invocation request #22 sent by the UE, the RAN needs to add the NCCF service identity to a packet header of N3 based on a mapping relationship between the NCCF service identity and the air interface bearer. Alternatively, when receiving a message that is sent by the UE and that includes the computing power service invocation request, the RAN searches, based on a mapping relationship between a PDU session and an air interface, for the ULCL/BP corresponding to the PDU session.

S815: The RAN sends a computing power service invocation request #33 to the ULCL/BP. Correspondingly, the ULCL/BP receives the computing power service invocation request #33 (an example of the second computing power request) from the RAN.

For example, when receiving the computing power service request #33 of the UE, the ULCL/BP selects a next-hop route based on an actual load status of the NCCF node and a plurality of N9 connections associated with the NCCF service identity, that is, finally determines the NCCF node. For example, the NCCF service identity may be added to the computing power service invocation request #11 by the application software on the UE side in step S8813, or may be added to the computing power service invocation request #22 by the UE in step S814, or may be added to the computing power service invocation request #33 by the RAN in step S815. When receiving the computing power service request #33 of the RAN, the ULCL/BP may determine, by parsing the packet header information of the computing power service request #33, an NCCF service identity associated with the computing power service requested by the UE, and then determine to send a computing power service request #44 to the NCCF.

S816: The RAN sends a computing power service invocation request #44 to the NCCF. Correspondingly, the NCCF receives the computing power service invocation request #44 (an example of the second computing power request) from the RAN.

Based on steps S811 to S816, the UE and the application software complete obtaining and storage of the NCCF node information (for example, the address information and/or the port of the NCCF node, the NCCF identifier information, or the mapping relationship between the connection information of the NCCF node and the computing power service), and when the application software determines that the computing power service is required, send the corresponding computing power service invocation request to the NCCF on a bearer resource allocated by a network sequentially through the UE, the RAN, and the ULCL/BP.

S817: The NCCF processes the computing power service invocation request.

For specific implementations of steps S813 to S816, refer to the related descriptions of steps S711 to S714 in the method 700. A difference lies in that in this implementation, the computing power service invocation request is forwarded between the RAN and the NCCF through the ULCL/BP. For brevity, details are not described herein.

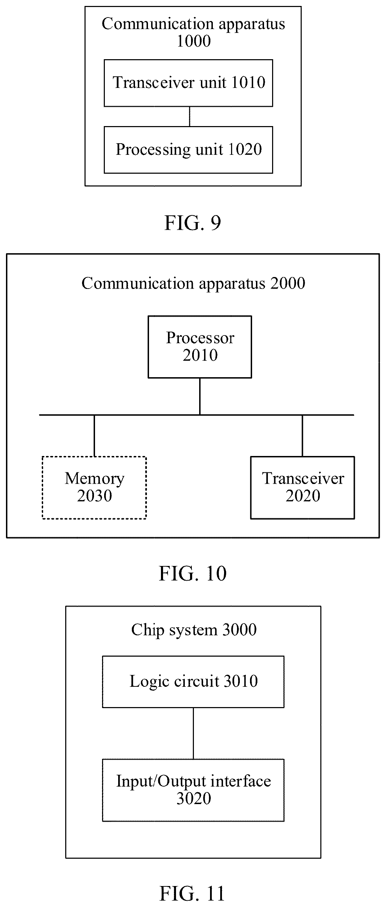

According to the technical solution of this application, a process of selecting a computing service node NCCF is integrated with a process of selecting a communication node. When selecting an NCCF node, the CMF comprehensively considers a communication route and NCCF node information, for example, a computing power service capability and a load that can be supported by the NCCF node, and a computing power requirement of the application software, so that the selected NCCF node can well support a computing power service request of the UE, and a route carrying the computing power service request is determined before the computing power service request. In this way, when the UE really needs to invoke a network computing power service, the UE may perform communication routing according to a current communication mode, and reach the computing power node with a minimum delay, thereby simplifying signaling exchange, reducing a delay required in the entire process, and improving network communication efficiency. The foregoing describes in detail embodiments on a communication method side of this application with reference to FIG. 1 to FIG. 8. The following describes in detail embodiments on a communication apparatus side of this application with reference to FIG. 9 and FIG. 10. It should be understood that descriptions of the apparatus embodiments correspond to the descriptions of the method embodiments. Therefore, for a part that is not described in detail, refer to the foregoing method embodiments.

FIG. 9 is a block diagram of a communication apparatus 1000 according to an embodiment of this application. As shown in FIG. 9, the apparatus 100 may include a transceiver unit 1010 and a processing unit 1020. The transceiver unit 1010 may communicate with the outside, and the processing unit 1020 is configured to process data. The transceiver unit 1010 may also be referred to as a communication interface or a sending/receiving unit.

In a possible design, the apparatus 1000 may implement steps or procedures performed by the terminal device (for example, the UE) in the foregoing method embodiments. The processing unit 1020 is configured to perform processing-related operations of the UE in the foregoing method embodiments, and the transceiver unit 1010 is configured to perform receiving and sending-related operations of the UE in the foregoing method embodiments.

In another possible design, the apparatus 1000 may implement steps or procedures performed by the access network device (for example, the RAN) in the foregoing method embodiments. The transceiver unit 1010 is configured to perform receiving and sending-related operations of the RAN in the foregoing method embodiments, and the processing unit 1020 is configured to perform processing-related operations of the RAN in the foregoing method embodiments.

In still another possible design, the apparatus 1000 may implement steps or procedures performed by the converged control function network element (for example, the CMF) in the foregoing method embodiments. The transceiver unit 1010 is configured to perform receiving and sending-related operations of the CMF in the foregoing method embodiments, and the processing unit 1020 is configured to perform processing-related operations of the CMF in the foregoing method embodiments.

In still another possible design, the apparatus 1000 may implement steps or procedures performed by the network computing converged function network element (for example, the NCCF) in the foregoing method embodiments. The transceiver unit 1010 is configured to perform receiving and sending-related operations of the NCCF in the foregoing method embodiments, and the processing unit 1020 is configured to perform processing-related operations of the NCCF in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform procedures and/or steps corresponding to the transmit end in the foregoing method embodiments; or the device 1000 may be specifically a receive end in the foregoing embodiments, and may be configured to perform procedures and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In embodiments of this application, the apparatus in FIG. 9 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a block diagram of a communication apparatus 2000 according to an embodiment of this application. As shown in FIG. 10, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the terminal device (for example, the UE) in the foregoing method embodiments. In another possible implementation, the apparatus 2000 is configured to implement procedures and steps corresponding to the access network device (for example, the RAN) in the foregoing method embodiments.

In still another possible implementation, the apparatus 2000 is configured to implement procedures and steps corresponding to the converged control function network element (for example, the CMF) in the foregoing method embodiments.

In still another possible implementation, the apparatus 2000 is configured to implement procedures and steps corresponding to the network computing converged function (for example, the NCCF) in the foregoing method embodiments.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a nonvolatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 11 is a block diagram of a chip system 3000 according to an embodiment of this application. As shown in FIG. 11, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by a terminal device in the foregoing method embodiments.

For example, the logic circuit 3010 is configured to implement processing-related operations performed by the terminal device in the foregoing method embodiments, for example, processing-related operations performed by the terminal device in the embodiments shown in FIG. 2 to FIG. 8; and the input/output interface 3020 is configured to implement sending/receiving-related operations performed by the terminal device in the foregoing method embodiments, for example, sending/receiving-related operations performed by the terminal device in the embodiment shown in FIG. 2 to FIG. 8.

For another example, the logic circuit 3010 is configured to implement processing-related operations performed by the access network device in the foregoing method embodiments, for example, processing-related operations performed by the access network device in the embodiments shown in FIG. 2 to FIG. 8; and the input/output interface 3020 is configured to implement sending/receiving-related operations performed by the access network device in the foregoing method embodiments, for example, sending/receiving-related operations performed by the access network device in the embodiment shown in FIG. 2 to FIG. 8.

For another example, the logic circuit 3010 is configured to implement processing-related operations performed by the converged control function network element in the foregoing method embodiments, for example, processing-related operations performed by the converged control function network element in the embodiments shown in FIG. 2 to FIG. 8; and the input/output interface 3020 is configured to implement sending/receiving-related operations performed by the converged control function network element in the foregoing method embodiments, for example, sending/receiving-related operations performed by the converged control function network element in the embodiment shown in FIG. 2 to FIG. 8.

For another example, the logic circuit 3010 is configured to implement processing-related operations performed by the network computing converged function network element in the foregoing method embodiments, for example, processing-related operations performed by the network computing converged function network element in the embodiments shown in FIG. 2 to FIG. 8; and the input/output interface 3020 is configured to implement sending/receiving-related operations performed by the network computing converged function network element in the foregoing method embodiments, for example, sending/receiving-related operations performed by the network computing converged function network element in the embodiment shown in FIG. 2 to FIG. 8.

For explanations and beneficial effects of related content of any one of the apparatuses provided above, refer to the corresponding method embodiments provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or an apparatus) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first computing power request from a terminal device, wherein the first computing power request is used to request the converged management function network element to allocate a computing network converged function network element, and the computing network converged function network element can provide a computing power service for the terminal device;
obtaining information about the computing network converged function network element; and
sending the information about the computing network converged function network element to the terminal device in response to the first computing power request.

2. The method according to claim 1, wherein the first computing power request is further used to request to create or modify a protocol data unit PDU session required for a communication connection between the terminal device and the computing network converged function network element, and the PDU session is associated with the computing power service.

3. The method according to claim 1 or 2, wherein before obtaining the information about the computing network converged function network element, the method further comprises:
determining, based on a computing power service indication carried in the first computing power request, one or more computing power services that the terminal device needs to invoke; or
determining, based on a local query, one or more computing power services that the terminal device needs to invoke.

4. The method according to claim 3, wherein the method further comprises:
selecting one or more computing network converged function network elements from a computing power information base based on the one or more computing power services that the terminal device needs to invoke; or
selecting one or more computing network converged function network elements from a computing power information base based on the one or more computing power services that the terminal device needs to invoke and load information of the computing network converged function network element.

5. The method according to any one of claims 2 to 4, wherein the method further comprises:
determining that the PDU session exists between the terminal device and the computing network converged function network element.

6. The method according to any one of claims 2 to 4, wherein the method further comprises:
determining, based on the first computing power request, that the PDU session for the communication connection between the terminal device and the computing network converged function network element needs to be created or modified.

7. The method according to claim 6, wherein the method further comprises:
sending an N2 request to an access network device, wherein the N2 request comprises information used to create or modify a PDU required for a communication connection between the terminal device and the computing network converged function network element.

8. The method according to claim 7, wherein the method further comprises:
sending an N4 request to the computing network converged function network element, wherein the N4 request comprises information used to create or modify a PDU session required for a communication connection between the terminal device and the computing network converged function network element.

9. The method according to any one of claims 1 to 8, wherein the information about the computing network converged function network element comprises connection information of the computing network converged function network element.

10. The method according to claim 9, wherein the connection information of the computing network converged function network element comprises one or more of the following:
address information of the computing network converged function network element; or
a port number used for creating or modifying a connection between the terminal device and the computing network converged function network element.

11. The method according to any one of claims 1 to 10, wherein the method further comprises:
generating, based on the connection information of the computing network converged function network element, a packet filtering rule corresponding to a first data flow of the PDU session; and
sending the packet filtering rule to the terminal device.

12. The method according to any one of claims 1 to 10, wherein the computing network converged function network element comprises a first computing network converged function network element and a second computing network converged function network element, and the method further comprises:
generating a first service identity, wherein the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point; and
sending the first service identity to the access network device, the uplink classifier, the branching point, or the terminal device.

13. The method according to any one of claims 2 to 10, wherein the computing power service comprises a first computing power service and a second computing power service, the computing network converged function network element comprises a first computing network converged function network element and a second computing network converged function network element, the first computing network converged function network element can provide the first computing power service for the terminal device, and the second computing network converged function network element can provide the second computing power service for the terminal device; and the method further comprises:
mapping a communication connection between the terminal device and the first computing network converged function network element to a first data flow of the PDU session, wherein the first data flow corresponds to a first N3 connection, and the first N3 connection is a communication connection between the access network device and the first computing network converged function network element;
mapping a communication connection between the terminal device and the second computing network converged function network element to a second data flow of the PDU session, wherein the second data flow corresponds to a second N3 connection, and the second N3 connection is a communication connection between the access network device and the second computing network converged function network element; and
sending, by the converged management function network element, a mapping relationship between the first data flow and the first N3 connection and a mapping relationship between the second data flow and the second N3 connection to the access network device.

14. The method according to any one of claims 2 to 10, wherein the computing power service comprises a first computing power service and a second computing power service, and the computing network converged function network element can provide the first computing power service and the second computing power service for the terminal device; and the method further comprises:
mapping the first computing power service to a first data flow of the PDU session, and mapping the second computing power service to a second data flow of the PDU session, wherein the first data flow and the second data flow are associated with a same N3 connection, and the N3 connection is a communication connection between the access network device and the computing network converged function network element; and
sending a mapping relationship between the first data flow and the N3 connection and a mapping relationship between the second data flow and the N3 connection to the access network device.

15. A communication method, comprising:
sending a first computing power request to a converged management function network element, wherein the first computing power request is used to request the converged management function network element to allocate a computing network converged function network element, and the computing network converged function network element can provide a computing power service for the terminal device;
receiving information about the computing network converged function network element from the converged management function network element; and
sending a second computing power request through an air interface bearer, wherein the second computing power request comprises the information about the computing network converged function network element, and the second computing power request is used to request the computing network converged function network element to provide the computing power service for the terminal device.

16. The method according to claim 15, wherein the first computing power request is further used to request to create or modify a protocol data unit PDU session required for a communication connection between the terminal device and the computing network converged function network element, and the PDU session is associated with the computing power service.

17. The method according to claim 15 or 16, wherein before sending the second computing power request through the air interface bearer, the method further comprises:
receiving a mapping relationship between the air interface bearer and the computing power service from an access network device.

18. The method according to any one of claims 15 to 17, wherein the information about the computing network converged function network element comprises connection information of the computing network converged function network element.

19. The method according to claim 18, wherein the connection information of the computing network converged function network element comprises one or more of the following:
address information of the computing network converged function network element; or
a port number used for creating or modifying a connection between the terminal device and the computing network converged function network element.

20. The method according to any one of claims 16 to 19, wherein before sending the second computing power request through the air interface bearer, the method further comprises:
receiving a packet filtering rule from the converged management function network element, wherein the packet filtering rule is determined based on the connection information of the computing network converged function network element, and the packet filtering rule corresponds to a first data flow of the PDU session;
receiving a mapping relationship between the air interface bearer and the first data flow from the access network device;
determining the first data flow based on the packet filtering rule; and
determining the air interface bearer based on the mapping relationship between the air interface bearer and the first data flow.

21. The method according to any one of claims 15 to 19, wherein the computing network converged function network element comprises a first computing network converged function network element and a second computing network converged function network element, and before sending the second computing power request through the air interface bearer, the method further comprises:
receiving a first service identity from the converged management function network element, wherein the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point;
receiving a mapping relationship between the first service identity and the air interface bearer from the access network device; and
determining the air interface bearer based on the first service identity.

22. The method according to any one of claims 16 to 19, wherein the computing power service comprises a first computing power service and a second computing power service, the computing network converged function network element comprises a first computing network converged function network element and a second computing network converged function network element, the first computing network converged function network element can provide the first computing power service for the terminal device, the second computing network converged function network element can provide the second computing power service for the terminal device, a communication connection between the terminal device and the first computing network converged function network element is mapped to a first data flow of the PDU session, and a communication connection between the terminal device and the second computing network converged function network element is mapped to a second data flow of the PDU session; and the method further comprises:
receiving a mapping relationship between a first air interface bearer and the first data flow and a mapping relationship between a second air interface bearer and the second data flow from the access network device, wherein the first air interface bearer and the second air interface bearer belong to the air interface bearer, the first data flow corresponds to a first N3 connection, the first N3 connection is a communication connection between the access network device and the first computing network converged function network element, the second data flow corresponds to a second N3 connection, and the second N3 connection is a communication connection between the access network device and the second computing network converged function network element; and
sending the second computing power request through the first data flow, wherein the second computing power request is used to request the first computing network converged function network element to provide the first computing power service; and/or
sending the second computing power request through the second data flow, wherein the second computing power request is used to request the second computing network converged function network element to provide the second computing power service.

23. The method according to any one of claims 16 to 19, wherein the computing power service comprises a first computing power service and a second computing power service, the computing network converged function network element can provide the first computing power service and the second computing power service for the terminal device, the first computing power service is associated with a first data flow of the PDU session, and the second computing power service is associated with a first data flow of the PDU session; and the method further comprises:
receiving a mapping relationship between the first data flow of the PDU session and the air interface bearer and a mapping relationship between the second data flow of the PDU session and the air interface bearer from the access network device, wherein the first data flow and the second data flow are associated with a same N3 connection, and the N3 connection is a communication connection between the access network device and the computing network converged function network element; and
sending the second computing power request through the first data flow, wherein the second computing power request is used to request the computing network converged function network element to provide the first computing power service; and/or
sending, by the terminal device, the second computing power request through the second data flow, wherein the second computing power request is used to request the computing network converged function network element to provide the second computing power service.

24. A communication method, comprising:
receiving a second computing power request from a terminal device, wherein the second computing power request is used to request the computing network converged function network element to provide a computing power service for the terminal device, and the second computing power request comprises information about the computing network converged function network element; and
providing the computing power service for the terminal device.

25. The method according to claim 24, wherein before receiving the second computing power request, the method further comprises:
receiving an N4 request from a converged management function network element, wherein the N4 request comprises information used to create or modify a protocol data unit PDU session required for a communication connection between the terminal device and the computing network converged function network element.

26. The method according to claim 24 or 25, wherein receiving the second computing power request from the terminal device comprises:
receiving the second computing power request from the access network device through an N3 connection; or
receiving the second computing power request from an uplink classifier or a branching point through an N9 connection.

27. The method according to any one of claims 24 to 26, wherein before providing the computing power service for the terminal device, the method further comprises:
determining, based on load information of the computing network converged function network element, whether to provide the computing power service for the terminal device.

28. The method according to any one of claims 24 to 27, wherein the information about the computing network converged function network element comprises connection information of the computing network converged function network element.

29. The method according to claim 28, wherein the connection information of the computing network converged function network element comprises one or more of the following:
address information of the computing network converged function network element; or
a port number used for creating or modifying a connection between the terminal device and the computing network converged function network element.

30. A communication method, comprising:
receiving an N2 request from a converged management function network element, wherein the N2 request comprises information used to create or modify a PDU session required for a communication connection between a terminal device and a computing network converged function network element, wherein the computing network converged function network element can provide a computing power service for the terminal device; and
based on the N2 request, creating or modifying an N3 connection required for a communication connection between the terminal device and the computing network converged function network element, and creating or modifying an air interface bearer required for a communication connection between the terminal device and the computing network converged function network element.

31. The method according to claim 30, wherein the method further comprises:
receiving a second computing power request from the terminal device through the air interface bearer, wherein the second computing power request comprises information about the computing network converged function network element, and the second computing power request is used to request the computing network converged function network element to provide the computing power service for the terminal device; and
determining, based on a mapping relationship between the air interface bearer and the N3 connection, to send the second computing power request to the computing network converged function network element through the N3 connection.

32. A communication method, comprising:
obtaining, by a converged management function network element, information about a computing network converged function network element, wherein the computing network converged function network element can provide a computing power service for a terminal device;
sending, by the converged management function network element, an N4 request to the computing network converged function network element, wherein the N4 request comprises information used to create or modify a protocol data unit PDU session required for a communication connection between the terminal device and the computing network converged function network element;
receiving, by the computing network converged function network element, the N4 request from the converged management function network element; and
creating or modifying, by the computing network converged function network element based on the N4 request, the PDU session required for the communication connection between the terminal device and the computing network converged function network element.

33. The method according to claim 32, wherein the method further comprises:
sending, by an access network device, a mapping relationship between an air interface bearer and the computing power service to the terminal device;
receiving, by the terminal device, the mapping relationship between the air interface bearer and the computing power service from the access network device;
sending, by the terminal device, a second computing power request to the access network device through the air interface bearer, wherein the second computing power request comprises the information about the computing network converged function network element, and the second computing power request is used to request the computing network converged function network element to provide the computing power service for the terminal device; and
receiving, by the access network device, the second computing power request from the terminal device through the air interface bearer.

34. The method according to claim 33, wherein the method further comprises:
determining, by the access network device based on a mapping relationship between the air interface bearer and the N3 connection, to send the second computing power request to the computing network converged function network element through the N3 connection;
sending, by the access network device, the second computing power request to the computing network converged function network element, and receiving, by the computing network converged function network element, the second computing power request from the access network device; and
providing, by the computing network converged function network element, the computing power service for the terminal device.

35. The method according to claim 34, wherein before providing, by the computing network converged function network element, the computing power service for the terminal device, the method further comprises:
determining, by the computing network converged function network element based on load information of the computing network converged function network element, whether to provide the computing power service for the terminal device.

36. The method according to any one of claims 32 to 35, wherein before obtaining, by the converged management function network element, the information about the computing network converged function network element, the method further comprises:
sending, by the terminal device, a first computing power request to the converged management function network element, and receiving, by the converged management function network element, the first computing power request from the terminal device, wherein the first computing power request is used to request the converged management function network element to allocate a computing network converged function network element, and the computing network converged function network element can provide a computing power service for the terminal device.

37. The method according to claim 36, wherein the method further comprises:
in response to the first computing power request, sending, by the converged management function network element, information about the computing network converged function network element to the terminal device, and receiving, by the terminal device, the information about the computing network converged function network element from the converged management function network element.

38. The method according to any one of claims 32 to 37, wherein the first computing power request is further used to request to create or modify a protocol data unit PDU session required for a communication connection between the terminal device and the computing network converged function network element, and the PDU session is associated with the computing power service.

39. The method according to any one of claims 36 to 38, wherein before obtaining the information about the computing network converged function network element, the method further comprises:
determining, by the converged management function network element based on a computing power service indication carried in the first computing power request, one or more computing power services that the terminal device needs to invoke; or
determining, by the converged management function network element based on a local query, one or more computing power services that the terminal device needs to invoke.

40. The method according to claim 39, wherein the method further comprises:
selecting, by the converged management function network element, one or more computing network converged function network elements from a computing power information base based on the one or more computing power services that the terminal device needs to invoke; or
selecting, by the converged management function network element, one or more computing network converged function network elements from a computing power information base based on the one or more computing power services that the terminal device needs to invoke and load information of the computing network converged function network element.

41. The method according to any one of claims 33 to 40, wherein before sending, by the access network device, the mapping relationship between the air interface bearer and the computing power service to the terminal device, the method further comprises:
sending, by the converged management function network element, an N2 request to the access network device, and receiving, by the access network device, the N2 request from the converged management function network element, wherein the N2 request comprises information used to create or modify a PDU session required for a communication connection between the terminal device and the computing network converged function network element, and the computing network converged function network element can provide the computing power service for the terminal device; and
based on the N2 request, creating or modifying, by the access network device, an N3 connection required for a communication connection between the terminal device and the computing network converged function network element, and creating or modifying an air interface bearer required for a communication connection between the terminal device and the computing network converged function network element.

42. The method according to any one of claims 32 to 41, wherein the method further comprises:
determining, by the converged management function network element, that the PDU session exists between the terminal device and the computing network converged function network element.

43. The method according to any one of claims 36 to 42, wherein the method further comprises:
determining, by the converged management function network element based on the first computing power request, that the PDU session for the communication connection between the terminal device and the computing network converged function network element needs to be created or modified.

44. The method according to any one of claims 33 to 43, wherein the method further comprises:
generating, by the converged management function network element based on connection information of the computing network converged function network element, a packet filtering rule corresponding to a first data flow of the PDU session;
sending, by the converged management function network element, the packet filtering rule to the terminal device, and receiving, by the terminal device, the packet filtering rule from the converged management function network element;
receiving, by the terminal device, a mapping relationship between the air interface bearer and the first data flow from the access network device;
determining, by the terminal device, the first data flow based on the packet filtering rule; and
determining, by the terminal device, the air interface bearer based on the mapping relationship between the air interface bearer and the first data flow.

45. The method according to any one of claims 33 to 43, wherein the computing network converged function network element comprises a first computing network converged function network element and a second computing network converged function network element, and the method further comprises:
generating, by the converged management function network element, a first service identity, wherein the first service identity corresponds to the computing power service that the terminal device needs to invoke, and the first service identity is associated with an N3 connection between the first computing network converged function network element and the access network device and an N3 connection between the second computing network converged function network element and the access network device; or the first service identity is associated with an N9 connection between the first computing network converged function network element and an uplink classifier or a branching point and an N9 connection between the second computing network converged function network element and the uplink classifier or the branching point;
sending, by the converged management function network element, the first service identity to the access network device, the uplink classifier, the branching point, or the terminal device, and receiving, by the access network device, the uplink classifier, the branching point, or the terminal device, the first service identity from the converged management function network element;
receiving, by the terminal device, a mapping relationship between the first service identity and the air interface bearer from the access network device; and
determining, by the terminal device, the air interface bearer based on the first service identity.

46. The method according to any one of claims 33 to 43, wherein the computing power service comprises a first computing power service and a second computing power service, the computing network converged function network element comprises a first computing network converged function network element and a second computing network converged function network element, the first computing network converged function network element can provide the first computing power service for the terminal device, and the second computing network converged function network element can provide the second computing power service for the terminal device; and the method further comprises:
mapping, by the converged management function network element, a communication connection between the terminal device and the first computing network converged function network element to a first data flow of the PDU session, wherein the first data flow corresponds to a first N3 connection, and the first N3 connection is a communication connection between the access network device and the first computing network converged function network element;
mapping, by the converged management function network element, a communication connection between the terminal device and the second computing network converged function network element to a second data flow of the PDU session, wherein the second data flow corresponds to a second N3 connection, and the second N3 connection is a communication connection between the access network device and the second computing network converged function network element; and
sending, by the converged management function network element, a mapping relationship between the first data flow and the first N3 connection and a mapping relationship between the second data flow and the second N3 connection to the access network device.

47. The method according to any one of claims 33 to 43, wherein the computing power service comprises a first computing power service and a second computing power service, and the computing network converged function network element can provide the first computing power service and the second computing power service for the terminal device; and the method further comprises:
mapping, by the converged management function network element, the first computing power service to a first data flow of the PDU session, and mapping the second computing power service to a second data flow of the PDU session, wherein the first data flow and the second data flow are associated with a same N3 connection, and the N3 connection is a communication connection between the access network device and the computing network converged function network element;
sending, by the converged management function network element, a mapping relationship between the first data flow and the N3 connection and a mapping relationship between the second data flow and the N3 connection to the access network device, and receiving, by the access network device, the mapping relationship between the first data flow and the N3 connection and the mapping relationship between the second data flow and the N3 connection from the converged management function network element;
sending, by the access network device, a mapping relationship between a first air interface bearer and the first data flow and a mapping relationship between a second air interface bearer and the second data flow to the terminal device, and receiving, by the terminal device, the mapping relationship between the first air interface bearer and the first data flow and the mapping relationship between the second air interface bearer and the second data flow from the access network device, wherein the first air interface bearer and the second air interface bearer belong to the air interface bearer, the first data flow corresponds to a first N3 connection, the first N3 connection is a communication connection between the access network device and the first computing network converged function network element, the second data flow corresponds to a second N3 connection, and the second N3 connection is a communication connection between the access network device and the second computing network converged function network element; and
sending, by the terminal device, the second computing power request through the first data flow, wherein the second computing power request is used to request the first computing network converged function network element to provide the first computing power service; and/or
sending, by the terminal device, the second computing power request by using the second data flow, wherein the second computing power request is used to request the second computing network converged function network element to provide the second computing power service.

48. The method according to any one of claims 32 to 47, wherein the information about the computing network converged function network element comprises connection information of the computing network converged function network element.

49. The method according to claim 48, wherein the connection information of the computing network converged function network element comprises one or more of the following:
address information of the computing network converged function network element; or
a port number used for creating or modifying a connection between the terminal device and the computing network converged function network element.

50. A communication apparatus, comprising a module or unit configured to perform the method according to any one of claims 1 to 14, or a module or unit configured to perform the method according to any one of claims 15 to 23, or a module or unit configured to perform the method according to any one of claims 24 to 29, or a module or unit configured to perform the method according to claim 30 or 31.

51. A communication apparatus, wherein the apparatus comprises a processor, the processor is coupled to a memory, the memory stores instructions, and when the instructions are run by the processor, the processor performs the method according to any one of claims 1 to 14, the method according to any one of claims 15 to 23, the method according to any one of claims 24 to 29, or the method according to claim 30 or 31.

52. A communication system, comprising a converged management function network element, a computing network converged function network element, and an access network device, wherein the converged management function network element is configured to perform the method according to any one of claims 15 to 23, the computing network converged function network element is configured to perform the method according to any one of claims 24 to 29, and the access network device is configured to perform the method according to claim 30 or 31.

53. The communication system according to claim 52, wherein the communication system further comprises a terminal device, and the terminal device is configured to perform the method according to any one of claims 1 to 14.

54. A computer-readable storage medium, wherein the computer-readable storage medium is configured to store computer program code or instructions, and when the computer program code or the instructions are run on a computer, the computer performs the method according to any one of claims 1 to 14, the method according to any one of claims 15 to 23, the method according to any one of claims 24 to 29, or the method according to claim 30 or 31.

55. A computer program product, wherein when the computer program product is executed by a communication apparatus, the method according to any one of claims 1 to 14, the method according to any one of claims 15 to 23, the method according to any one of claims 24 to 29, or the method according to claim 30 or 31 is implemented.
